# EUROPEAN PATENT APPLICATION

(11) **EP 4 682 342 A2**
(43) Date of publication of application: **21.01.2026**
(21) Application number: 24735115.8
(22) Date of filing: 21.02.2024
(51) Int. Cl.: E06B 3/663, E06B 3/67, E06B 3/56, E06B 3/66, C03C 27/08

(54) **GLASS DEEP PROCESSING TECHNOLOGY AND MOUNTING TECHNOLOGY**

(30) Priority: 20.08.2023 CN 202322238494 U; 21.12.2023 CN 202323495061 U
(71) Applicant: CNBM Yaohua (Neijiang) Energy-Saving Glass Co., Ltd., Neijiang, Sichuan 641299 (CN); Wu, Shuhuan, Harbin, Heilongjiang 150001 (CN)
(72) Inventor: WU, Shuhuan, Harbin, Heilongjiang 150001 (CN); HU, Dianfang, Qinhuangdao, Hebei 066000 (CN); CHEN, Jian, Neijiang, Sichuan 641200 (CN); DONG, Xiyang, Neijiang, Sichuan 641200 (CN); LIU, Weidong, Qinhuangdao, Hebei 066000 (CN)
(74) Representative: De Clercq & Partners
(86) International application number: PCT/CN2024/077859
(87) International publication number: WO 2024/131995

(57) **Abstract**

Glass deep processing technology and mounting technology, aimed at the problems of the current vacuum glass, insulating glass and laminated glass involving poor sealing and poor energy-saving, multiple glass thermal bridges during mounting, and it being unscientific to mount thin-film-type solar photovoltaic laminated glass on buildings. I: vacuum glass is sealed by welding copper foil and a copper layer with which an outer end of glass is spray-coated, or the vacuum glass is sealed by using a spray-coating layer or adding an adhesive to bond aluminum foil; II: a coated layer is coated with an epoxy resin adhesive for bonding, wherein it is unnecessary to remove the coated layer; and an insulating glass spacer is externally coated with the epoxy resin adhesive to bond the aluminum foil for sealing; III: a fixed-sash thermal bridge and an open-sash thermal bridge are removed to mount glass; IV: an air-permeable portion of laminated glass or the laminated glass is sealed with the epoxy resin adhesive; and V: mounting bonding cushion blocks between the photovoltaic laminated glass and a base layer wholly or partially replaces mounting and fixing iron members. The present invention solves the problems of the poor sealing and durability of the current glass deep processing technology, avoids glass thermal bridges during mounting, and can mount the photovoltaic laminated glass on external walls and roofs.

## Description

### TECHNICAL FIELD

The present disclosure relates to the glass technology, and in particular to a glass deep processing technology and mounting technology.

### BACKGROUND

At present, it is difficult to achieve industrialization of vacuum insulating glass due to high investment, difficult fabrication, high energy consumption and high cost in fabrication of the vacuum insulating glass by means of a high-temperature kiln. The vacuum insulating glass suffers from excessive thermal bridge at a sealed edge, making it difficult to achieve low heat transfer coefficient, while the vacuum insulating glass fabricated by means of the high-temperature kiln may have leakage rate.

At present, the sealing durability of the insulating glass unit is only 15 years, which is not suitable for increasingly high requirements of energy saving and emission reduction. In addition, it is impossible to replace the insulating glass unit of the building only used for 15 years. Thus, the glass fabrication industry itself is a high energy consumption industry.

However, the service life of most insulating glass unit is actually less than 15 years. With the continuous improvement of energy-saving standards, it is found that a heat transfer coefficient of the insulating glass unit rises since the loss of inert gas in the insulating glass unit, oxidation of the silver on a Low Emissivity (Low-e) coating on the glass and the damage of the coating. Within the glass industry, it is said that the coating on the glass does not work after used for 8-10 years, which causes sharp rise of the heat transfer coefficient of the insulating glass unit. When put into production, the insulating glass unit with low heat transfer coefficient rises to a heat transfer coefficient of common insulating glass unit of (2.8-3) w/m²·k after used for a short time. However, this is hidden from and unknown to the user.

At present, the insulating glass unit is sealed by a hot-melt butyl sealant and a silicone structural adhesive filled on an outer side of a spacer. As can be known, the hot-melt butyl sealant (hereinafter referred to as butyl adhesive) is a sealant made from butyl rubber, which is one of the sealants with the largest consumption in the world. It has always been generally believed that butyl adhesive has excellent weather resistance, heat resistance, acid and alkali resistance, and excellent air tightness and electrical insulation. However, it has proved that the butyl adhesive is difficult to ensure long-term sealing of the insulating glass unit. Other adhesives, such as a silicone structural adhesive, have poor sealing performance and is mainly suitable for sealing against water, but not suitable for sealing against gases. Some documents indicate that the barrier property of the silicone structural adhesive is about 1/6 of that of the butyl adhesive. The silicone structural adhesive functions to bond glass panes on both sides and the spacer, thereby enhancing tensile adhesion strength between components of the insulating glass unit.

In the severe situation of carbon emission control, the heat transfer coefficient of the insulating glass unit can be greatly reduced only by fabricating a multi-cavity suspended-film insulating glass unit. However, the multi-cavity suspended-film insulating glass unit is complex in fabrication process, high in investment, and high in cost, and inadequate sealing performance of the insulating glass unit hinders the development of the multi-cavity suspended-film insulating glass unit.

At present, when fabricating the insulating glass unit, the poor compatibility between the Low-e coating and a silicone structural adhesive and the butyl sealant for edge sealing can compromise bonding strength. Thus, it is required to use a grinding wheel to remove the Low-e coating on the sealed edge of the glass pane, which significantly increases labor intensity. In addition, incomplete removement of the Low-e coating from the (PET) film may lead to adverse consequences that affect the service life of the insulating glass unit, which hinders the widespread adoption of the multi-cavity suspended-film insulating glass unit.

The foregoing reasons results in the problem of high heat transfer coefficient of the insulating glass unit has remained unresolved for a long time.

Glass represents a critical thermal weak point in the building, with heat loss through glasses resulting in several thousand times more energy emission than that from automobiles. This significantly contributes to rising fossil fuel consumption. However, such energy loss is often overlooked due to its invisibility, resulting in high global carbon emission, which is the most important reason why global climate change is difficult to control. It is necessary to improve the sealing durability of the insulating glass unit and ensure the stability of the heat transfer coefficient within the service life, thus the multi-cavity suspended-film insulating glass unit needs to be promoted and popularized.

The current laminated glass, including solar photovoltaic laminated glass, suffers from inadequate edge sealing and poor moisture resistance, and is easy to open glue due to prolonged exposure to a humid environment, resulting in short service life of the laminated glass, which affects the output power of a solar cell module, and may even cause short circuit due to electric leakage, affecting the investment benefit of photovoltaic power generation. In addition, it is difficult to solve the problem of the impact of electricity output from centrally constructed photovoltaic power plants on the power grid. These problems restrict the development of the photovoltaic power generation industry.

To solve the foregoing problems, the present disclosure provides glass deep processing technology and mounting technology.

### SUMMARY

An objective of the present disclosure is to provide a glass deep processing technology and mounting technology to solve the problems in the background.

The first of the glass deep processing technology and mounting technology is an external sealing technology for vacuum insulating glass or insulating glass unit. The vacuum insulating glass includes vacuum insulating glass which is fabricated via a current high-temperature kiln and may have a leakage rate, and further includes vacuum insulating glass fabricated at a room temperature. A spacer material of each of the insulating glass unit and the vacuum insulating glass fabricated at the room temperature is a spacer. Each of the insulating glass unit and the vacuum insulating glass further includes glass panes and an adhesive; during fabricating the vacuum insulating glass at a room temperature, a stainless-steel spacer is bonded to a periphery of each of two glass panes of the vacuum insulating glass with an epoxy resin adhesive, peripheral sealing of the insulating glass unit or/and the vacuum insulating glass adopts the following structures and methods, which are selected as required:
1. a copper layer is sprayed on a peripheral section of each of two glass panes of the vacuum insulating glass or the vacuum insulating glass which is fabricated via the current high-temperature kiln and may have a leakage rate, a pinhole-free copper foil is welded on the copper layers sprayed on the glass panes with a tin solder for sealing;
2. a material of the sprayed layer is sprayed onto the peripheral section of the vacuum insulating glass which is fabricated via the current high-temperature kiln and may have a leakage rate or is sprayed onto an end section of the assembled vacuum insulating glass fabricated at the room temperature for circumferentially sealing; and
3. the material of the sprayed layer is sprayed onto the periphery of the assembled insulating glass unit to improve the sealing of the insulating glass unit.

The sprayed layer 3 meets an adhesion requirement for the glass panes 1 and the spacer material 2.

The second of the glass deep processing technology and mounting technology is a technology that during fabrication of insulating glass unit, it not necessary to remove a Low-e coating on an edge of each glass pane and a Low-e coating on an edge of a (PET) polyethylene terephthalate film, so that the sealing of the insulating glass unit is enhanced, thereby increasing service life of the insulating glass unit. A glass pane of the insulating glass unit is a common glass, a safety glass, and a glass coated with a film or the glass pane 1 is further bonded with a coated (PET) film, or one or two of the glass panes on two sides of the insulating glass unit can be replaced with an acrylic (PMMA (polymethyl methacrylate)) board. The spacer of the insulating glass unit may be a common spacer. Interlayers are provided in the insulating glass unit to fabricate dual-cavity or multi-cavity insulating glass unit. The interlayer is a glass pane or an acrylic (PMMA) board, or the interlayer is an acrylic hollow board, and/or the interlayer is a (PET) suspended film. The suspended film can be a Low-e coating-coated (PET) film, or a (PET) film without a coating. Therefore, the technology of not requiring the removal of the Low-e coating on the edge of the glass pane and the removal of the Low-e coating on the edge of a (PET) film is as follows: an epoxy resin adhesive is coated on the Low-e coating on the edge of the glass pane for replacing a butyl adhesive, so as to bond with the spacer, or the epoxy resin adhesive is coated on the butyl adhesive on the Low-e coating and the spacer. That is, the Low-e coatings on all bonding surfaces are bonded with the epoxy resin adhesive. The Low-e coating on the edge of the glass pane and the Low-e coating on the suspended film do not need to be removed, and the epoxy resin adhesive meets requirements of high and low temperature resistance in a use environment. No matter what technology is used to mount the glass pane or the suspended film, as long as the epoxy resin adhesive is bonded onto the Low-e coating without the removal of the Low-e coatings on the glass pane and the (PET) film.

The third of the glass deep processing technology and mounting technology is a mounting method of glass. The glass includes single glass pane, insulating glass unit, vacuum insulating glass, or vacuum-insulating glass assembly. The mounting method relates to a mounting method for eliminating a thermal bridge of a fixed sash or cancelling a profile of the open sash and eliminating a thermal bridge of the profile of the open sash, a mounting method for changing the heat transfer of a gap of the open sash from convective air to static air to reduce heat transfer, or a mouthing method for prolonging service life of a silicone structural adhesive for the insulating glass unit of the curtain wall.

The fourth of the glass deep processing technology and mounting technology is a sealing technology of laminated glass. The laminated glass includes a laminated glass mounted on a door/window and a curtain wall of a building, and further includes a solar photovoltaic laminated glass. The solar photovoltaic laminated glass includes a crystalline-silicon-battery-type solar photovoltaic laminated glass and a thin-film-battery-type solar photovoltaic laminated glass. The laminated glass is sealed by a introduced high-barrier adhesive, where the high-barrier adhesive is an epoxy resin adhesive meeting the requirements of high and low temperature resistance, or other adhesives meeting the requirements of high barrier property. A weak portion of the laminated glass which may be air-permeable is coated with the epoxy resin adhesive for sealing; or when one side of the solar photovoltaic laminated glass is a (PET) plastic backboard, the epoxy resin adhesive is coated to a peripheral gap between ends of the plastic backboard and the glass pane 1; and/or a periphery of an interlayer in the middle of the laminated glass is shortened by a certain width, and the epoxy resin adhesive is injected into a gap between edges of the laminated glass; and/or an air barrier film is bonded to a side edge of the laminated glass by a certain width with the epoxy resin adhesive to block ultraviolet rays; or an aluminum alloy is bonded to a side edge of the solar photovoltaic laminated glass with the epoxy resin adhesive to block ultraviolet rays; or the epoxy resin adhesive is coated to an outer side or an inner side of a transparent backboard of the solar photovoltaic laminated glass; or when the solar photovoltaic laminated glass is cracked by hail or other external forces, the epoxy resin adhesive is coated to infiltrate into a crack for repairing; or spraying is carried out on a peripheral section of the laminated glass to form a sprayed layer, the epoxy resin adhesive is coated on the sprayed layer for sealing.

The fifth of the glass deep processing technology and mounting technology is a mounting method of solar photovoltaic laminated glass. The solar photovoltaic laminated glass includes a thin-film-battery-type photovoltaic laminated glass and a crystalline-silicon-battery-type photovoltaic laminated glass. A assembly prepared by using the mounting method of solar photovoltaic laminated glass includes a substrate, solar photovoltaic laminated glass, an adhesive, and blocks. The mounting method of solar photovoltaic laminated glass includes: bonding the blocks between the solar photovoltaic laminated glass and the substrate with a silicone structural adhesive, the bonded blocks are used for replacing all or part of the iron members. The block includes a dot-shaped block, or strip-shaped block. The substrate is a non-transparent substrate, or the substrate is glass. The block is bonded to the substrate with a silicone structural adhesive, and the silicone structural adhesive is coated to an upper surface of the block to bond the solar photovoltaic laminated glass to the block. Alternatively, the substrate or the block is connected to the solar photovoltaic laminated glass by the iron member. After the solar photovoltaic laminated glass is mounted, it is necessary to plug a circumferential gap between the edge of the solar photovoltaic laminated glass and the substrate.

Compared with the prior art, difference points and technical effects of the present disclosure are as follows:
1. In Embodiment 1, a peripheral of the vacuum insulating glass is sealed by welding copper foil, a sprayed layer (such as aluminum) is sprayed onto an end of the fabricated vacuum insulating glass, an epoxy resin adhesive is coated on the sprayed layer, or a pinhole-free aluminum foil is bonded. This is not only a vacuum sealing method but also a vacuum sealing structure. Embodiment 1 can be used for not only the sealing of the vacuum insulating glass fabricated at the room temperature, but also the sealing of the vacuum insulating glass which is fabricated via a current high-temperature kiln and may have a leakage rate. Embodiment 1 may further be used for the sealing of insulating glass unit, but a sealing requirement can be properly reduced. It is not recommended to be used in the insulating glass unit because of the complexity of manufacturing processes.

In Embodiment 1, the spraying, for example, is arc spraying, and aerodynamic spraying (that is, supersonic spraying). The existing spraying method is widely used in the fields of petrochemical industry, aerospace, transportation, papermaking, machinery and the like to improve surface oxidation resistance and wear resistance, restore size of a part and repair parts. However, the spraying technology has never been used in a vacuum technology. The sprayed layer 3 may also be formed by electroless plating, the sprayed copper layer 3 can be replaced with a silver coating, which belongs to equivalent replacement and falls within the scope of protection of the present disclosure. However, due to its environmental concerns, process complexity, and poor adhesion strength, the electroless plating is not recommended in the present disclosure.

A coating process on the glass or the (PET) film primarily employ physical vapor deposition, the most widely adopted method at present is a vacuum magnetron sputtering coating process, for example, a Low-e film is off-line sputtered on the glass or the PET film.

Fabricating the vacuum insulating glass at the room temperature means that a surrounding environment is at the room temperature when assembling the vacuum insulating glass. For example, mounting of the spacer and pillars as well as sealing and evacuation sealing of the vacuum insulating glass are all carried out at the room temperature, regardless of whether bake and exhaust are carried out on the glass or not.

Compared with melting a low-melting solder (such as low-melting glass powder and low-melting metal) via a current high-temperature kiln, an edge sealing technology of the vacuum insulating glass fabricated at the room temperature has the following advantages.
1. The edge sealing is simple, which cannot cause annealing of tempered glass and destroy the Low-e coating on the glass.
2. When a thickness of a stainless-steel hollow spacer plus a sprayed aluminum layer in the vacuum insulating glass fabricated at the room temperature is 2 mm, a heat transfer coefficient is increased by about 0.035 w/m²·k. In addition, an acrylic (PMMA) pillar additional mounted increases the heat transfer coefficient by 0.07 w/m²·k (calculated according to that a diameter of the pillar is φ6 and a spacing between the pillars is 70 mm). Compared with the edge seal and pillar of the vacuum insulating glass fabricated via the high-temperature kiln with a current vacuum layer of a height of 0.1 mm-0.3 mm, for medium-sized vacuum insulating glass of 1.5 m², the heat transfer coefficient of the vacuum insulating glass fabricated by using the method in Embodiment 1 is reduced by 0.2 w/m²·k to 0.3 w/m²·k, and the heat transfer coefficient is reduced by 25%-35% compared with the vacuum insulating glass fabricated at the current high-temperature kiln.
3. A stainless-steel hollow spacer is mounted in the vacuum insulating glass fabricated at the room temperature, and a height of vacuum layer thereof is dozens of times that of a current low-melting-point glass powder vacuum layer, so that the resistance generated when evacuating in a narrow vacuum layer can be avoided, thus rapid evacuation can be achieved, and the residual gas has little influence on the vacuum degree of the vacuum layer in a larger space, which is beneficial to ensuring the vacuum life.
4. It is ensured that the sealing is reliable and has no leakage rate in the vacuum insulating glass fabricated by using the method in Embodiment 1, while the current vacuum insulating glass has leakage rate.
5. The fabrication of the vacuum insulating glass at room temperature requires less investment, and does not need hundreds of millions of investments. The less energy consumption in the fabrication of the vacuum insulating glass can promote the industrialization of vacuum insulating glass and is of great significance to reducing greenhouse gas emissions and controlling climate change.

In Embodiment 2, technical effects of the technology of adding a sealing structure of the insulating glass unit and mounting a (PET) suspended-film technology are as follows.
1. The epoxy resin adhesive is introduced into the insulating glass unit, the obstacle of mechanically removing the Low-e coating during the fabrication of the insulating glass unit is eliminated, it is unnecessary to remove a Low-e coating on the glass pane and a Low-e coating on the (PET) film, the pollution of the Low-e coating during removing of the coating can be avoided, and the risk of unreliable adhesion and potential delamination of glass pane and suspended film caused by inadequate removal of the coating can be eliminated.
2. The air barrier film 5 (anodized aluminum foil) is added to seal the insulating glass unit absolutely, and it is ensured that the sealing durability of the insulating glass unit is 50 years or more. Within the service life, the heat transfer coefficient of the insulating glass unit is stable, and there is no adverse consequence caused by inadequate removal of coating.

At the outermost periphery of the insulating glass unit, the air barrier film 5-1 is bonded to the glass panes for sealing with the epoxy resin adhesive due to its good sealing and high bonding strength, which can protect the silicone structural adhesive from corrosion of water vapor, oxygen, salt spray, sulfur dioxide and the like, eliminating the factors leading to the aging of the silicone structural adhesive, and prolonging the service life of the silicone structural adhesive to 50 years or more. If there is an air barrier film 5 for sealing but there is no outermost air barrier film 5-1 for sealing, an internal seal of the insulating glass unit will not be destroyed. But the service life of the silicone structural adhesive may be less than 50 years, for example, in areas with high concentration of water vapor and salt fog at the seaside.

The above sealing technology should be adopted for mounting the insulating glass unit in general doors/windows of the building. However, when the insulating glass units are used for the curtain wall, after mounting the insulating glass units of the curtain wall, the air barrier film 5-1 (black anodized aluminum foil) can be bonded to both indoor and outdoor sides of a structural silicone adhesive at a joint for sealing, and can also be bonded to edges of the insulating glass units of the curtain wall, so that the ultraviolet rays cannot irradiate the adhesive on the edge of the insulating glass units of the curtain wall, ensuring the service life of the insulating glass units of the curtain wall.

3. Although multiple sealing is applied to the insulating glass unit, the coating and bonding operations are easy. The additional workload is much less than that required for removing the Low-e coating on the edge of the glass pane or removing the Low-e coating on the (PET) film.

4. A mounting structure and method for combining quick bonding and fixing with the double-sided adhesive tape and permanent bonding with the epoxy resin adhesive are provided, where the (PET) suspended film 8 can be fixed and mounted on an outer side of the spacer 2 with the double-sided adhesive tape with a width of 4 mm - 5 mm. The epoxy resin adhesive is arranged on each of both sides of the double-sided adhesive tape, the (PET) suspended film is permanently bonded to the outer side surface of the spacer 2 with the epoxy resin adhesive, so that the fixing and mounting of the (PET) suspended film have the advantages of rapid speed, convenient mounting, high adhesive strength, and good durability, thereby overcoming the difficulty of mounting the (PET) suspended film, promoting the popularization of multi-cavity suspended-film insulating glass unit with a low heat transfer coefficient, which has a great significance for greatly reducing the energy loss from the glass.

5. The epoxy resin adhesive has high bonding strength. Introduction of the epoxy resin adhesive into the insulating glass unit is essential to ensure the bonding strength between various materials for the multi-cavity suspended-film insulating glass unit and ensure the structural safety of the insulating glass unit. The epoxy resin adhesive provides a safety guarantee for canceling a profile of the open sash and directly mounting a glass of the open sash in Embodiment 3.

The PET film and the aluminum foil have high tensile strength, the bonding strength is high under the synergetic effect of the epoxy resin adhesive and the silicone structural adhesive, so that the spacer cannot move mistakenly, and the peripheral stiffness of the insulating glass unit is high, which ensures the reliable structure of the multi-cavity suspended-film insulating glass unit.

At various temperatures, even if a minimum tensile shear strength between the epoxy resin adhesive and the glass is only 1 MPa (which is much higher than 1 MPa in experiments), a bonding width at a bevel is 3.5 mm, and the tensile shear strength of the silicone structural adhesive is 0.45 MP. If the bonding width is 6 mm, that is, the total tensile force between the epoxy resin adhesive and the silicone structural adhesive is 620 kg/m along a bonding gap length of the insulating glass unit, it is impossible for the insulating glass unit to suffer from such a large peeling force. Due to good elasticity of the silicone structural adhesive, the synergistic effect of the silicone structural adhesive and the epoxy resin adhesive can ensure reliable tensile bonding between layers of the insulating glass unit.

To correct the uneven surface of the mounted PET suspended film 8, multiple infrared lamps can be embedded in a flat plate. Once the surface of the mounted PET suspended film is uneven, the infrared lamps are used to irradiate the PET suspended film, and the PET suspended film will be heated, shrunk and flattened. The combined infrared lamps can be hung under a ceiling and put down when used.

In conclusion, the technology used for insulating glass unit in Embodiment 2 is an important technology for fabricating the insulating glass unit with excellent durability and low heat transfer coefficient. In addition, the sealing technology in Embodiment 2 can be applied to a wide range of electronic industry sealing, thereby improving the service life of electrical products.

In Embodiment 3, a glass mounting structure may solve serious problems of high heat transfer coefficient and large energy loss of the current window profile. At present, the heat transfer coefficient of the window profile is too high, which makes an average heat transfer coefficient of assembly of double-cavity insulating glass unit with a heat transfer coefficient 0.7 w/m²·k and the profile is 1 to 1.2 w/m²·k. The glass mounting structure in Embodiment 3 can solve the above problems, such as eliminating thermal bridges of profiles of the fixed sash and the open sash, and changing air convection in a glass gap into static air, so that the heat transfer loss of building components outside the glass does not occur or basically does not occur, which plays an important role in reducing the heat loss of the window.

In Embodiment 4, a structure and method for sealing laminated glass with a high-barrier epoxy resin adhesive or an air barrier film can completely solve the problem of inadequate sealing of the laminated glass (including solar photovoltaic laminated glass), greatly improve the durability of the laminated glass and the solar photovoltaic laminated glass for buildings, and improve photovoltaic power generation efficiency.

In Embodiment 5, a mounting structure for mounting the solar photovoltaic laminated glass (also called solar power generation glass) on external walls and roofs of various buildings (including existing buildings and public buildings, residential buildings, industrial buildings and prefabricated buildings) is proposed, which provides almost endless sites for mounting the solar photovoltaic laminated glass, and can greatly reduce the cost of mounting the solar photovoltaic laminated glass, thereby forming distributed energy on the buildings. Therefore, photovoltaic power generation is easy to be managed and used nearby, and there is no loss of electricity in long-distance transmission, which avoids the impact of the photovoltaic power generation on a large grid, solves the problem that the current photovoltaic power generation impacts the large grid, and promotes the development of a photovoltaic industry.

A mounting angle of the thin-film-battery-type solar photovoltaic laminated glass is basically unlimited, and weak light can generate electricity, but there is no way to mounting the photovoltaic glass on the external wall at present. In a few application cases, there is no external wall, and the photovoltaic glass is used as a curtain wall to replace the external wall, which does not conform to the principle that energy conservation of the building should give priority to reducing the consumption of the building itself, and the electricity generated by the photovoltaic glass is wasted. To resist a wind pressure, a thickness of the glass pane on each of both sides needs to be 10 mm - 20 mm, the fabrication of a glass pane with a thickness of 10 mm - 20 mm has the energy consumption several times that of the glass pane with a thickness of 3.2 mm, a low production efficiency, and a high cost. In particular, it is extremely unreasonable to use the photovoltaic glass for a long time, because the photovoltaic glass generates heat during electricity production, which increases air-conditioning loads in summer due to the high heat transfer coefficient of the curtain wall with photovoltaic glass. In winter, the heat output from power generation is often insufficient to meet indoor heating demands, while excessive heat dissipation during non-generating nighttime hours increases heating energy consumption, failing to utilize the photovoltaic power generation energy properly. In addition, as most buildings require solid walls, it is extremely unscientific to mount the photovoltaic glass as the glass curtain wall to instead solid walls.

In Embodiment 5, it is proposed to mount the solar photovoltaic laminated glass by means of the iron member and a foamed polyester block, so that a thickness of 3.2 mm surfers the solar photovoltaic laminated glass, which can reduce the energy consumption and carbon emission during the glass fabrication, and has the advantages of simple fabrication, high production efficiency, greatly reduced fabrication cost of the photovoltaic glass, simple mounting, reasonable use and reduced mounting cost. Its cost is 1/6-1/4 of the cost of mounting the solar photovoltaic laminated glass as a glass curtain wall to replace the external wall.

The glass deep processing technology of the present disclosure is a sealing technology for glass with different use functions, and the glass deep processing technology and the mounting technology are combined to solve the problem that "Glass represents a critical thermal weak point in the building, with heat loss through glasses resulting in several thousand times more energy emission than that from automobiles. This significantly contributes to rising fossil fuel consumption....is the most important reason why global climate change is difficult to control " in BACKGROUND. In addition, the mounting structure and method for mounting the solar photovoltaic laminated glass on the external wall and roof of the building in Embodiment 5 form the distributed energy, so that a zero-energy-consumption building can be constructed, and the mounting structure and method are of great significance to reducing fossil energy consumption, reducing carbon emissions and controlling climate change. The present disclosure is the research achievement of the applicant of this patent since April 5, 2002, which is close to the 22nd anniversary, not only on the basis of interdisciplinary research, but also on the basis of extensive interdisciplinary research.

Without the sustainable development of society, other high technologies are useless, and the present disclosure is of great significance to the sustainable development of the society.

At present, the high-barrier adhesive with engineering applicability is an epoxy resin adhesive. The adhesive of the present disclosure should meet the requirements of strength, certain elasticity and durability in high and low temperature use environment, and the epoxy resin adhesive industry can provide the epoxy resin adhesive that meets this requirement. The silicone structural adhesive has good adaptability to high and low temperatures, good elasticity and low bonding strength which can meet the use requirements of the present disclosure in bonding.

After curing, the epoxy resin adhesive is a polymer of a three-dimensional network structure, which has good barrier property, but the epoxy resin adhesives with different molecular chains and different varieties have different properties. However, it is a complicated problem to test the barrier property of the epoxy resin adhesive. The problem of testing the barrier property of the epoxy resin adhesive is eliminated by bonding the air barrier film 5 to the outer side of the epoxy resin adhesive, which can prevent external air from penetrating into the air space. Although there may be other high-barrier adhesives, the price of other high-barrier adhesives is too high to be widely used in engineering, or new adhesives are still in the research stage, and there may be other adhesives suitable for engineering use.

There is "chlorine" in the epoxy resin adhesive. For working conditions of the epoxy resin adhesive in different embodiments, the requirements for the allowable content of "hydrolyzed chlorine" are different, and specific standards shall be determined through consensus-based deliberation by experts.

### BRIEF DESCRIPTION OF THE DRAWINGS

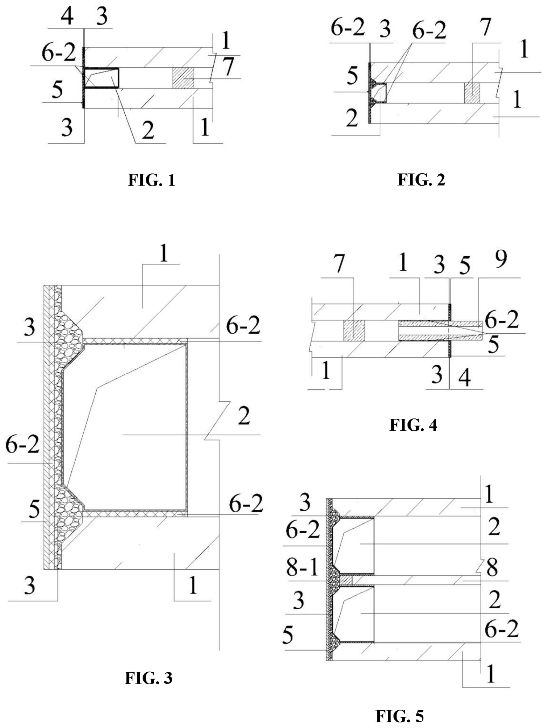

FIG. 1 is a sectional structural diagram of a vacuum insulating glass fabricated at a room temperature according to Embodiment 1 of the present disclosure, where an outer end section of each glass pane 1 is sprayed with a copper layer 3, a spacer 2 and a pillar 7 are mounted, and a copper foil 5 is welded to the copper layer 3 sprayed on the glass pane 1 with a tin solder 4.
FIG. 2 is a sectional diagram of an assembled vacuum insulating glass according to Embodiment 1, where an end section of the assembled vacuum insulating glass is sprayed with a sprayed layer 3 of, for example, aluminum.
FIG. 3 is a left enlarged view of the vacuum insulating glass of FIG. 2, where there is a bevel on an inner side of an outer end of a glass pane 1 of the vacuum insulating glass and on an outer side of a stainless-steel hollow spacer 2, and there is a small edge (or step) parallel to the outer end of the glass pane 1 near a root of a bonding surface of the vacuum insulating glass subjected to lamination; a groove is formed between the bevel of the glass pane 1 and the bevel of the stainless-steel hollow spacer 2, and there is a sprayed layer 3 in the groove, and a high-barrier epoxy resin adhesive 6-2 is coated on the sprayed layer 3 to bond an air barrier film 5 for sealing.
FIG. 4 is a sectional diagram of an evacuation tube 9 mounted on the vacuum insulating glass fabricated at a room temperature according to Embodiment 1.
FIG. 5 is a diagram of a sectional structure of an outer end of double-cavity vacuum insulating glass according to Embodiment 1, where a groove is formed between a glass pane 1 and a spacer 2, an interlayer 8 mounted at the middle of the double-layer vacuum insulating glass is an acrylic (PMMA) sheet, a stainless-steel bar 8-1 is arranged on an outer edge of the acrylic (PMMA) sheet, an outer end of the stainless-steel bar 8-1 and an inner side of an outer bevel of the stainless-steel hollow spacer 2 each are provided with a sprayed layer 3, a high-barrier adhesive 6-2 is coated on the sprayed layer 3, and then an air barrier film 5 (such as pinhole-free aluminum foil) is bonded on the high-barrier adhesive 6-2 for sealing.

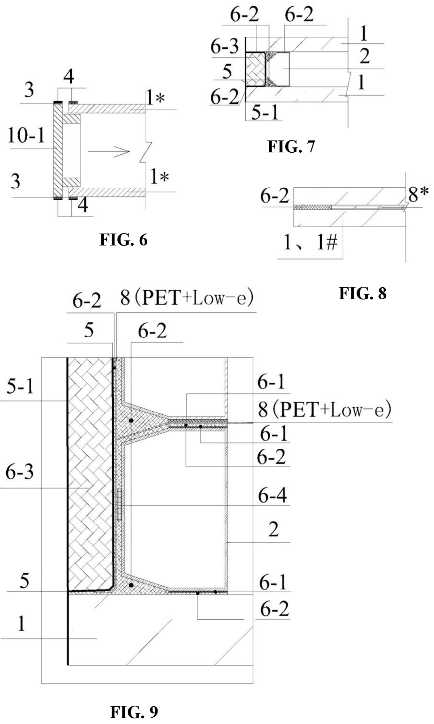

FIG. 6 is a structural diagram showing sealing of a vacuum chamber utilizing a sealing technology and structure for vacuum insulating glass fabricated at a room temperature according to Embodiment 1, where an edge of an open door 10-1 and an edge of an opening of a stainless-steel vacuum chamber 1* each are sprayed with a copper layer 3, the open door 10-1, after being inserted into the stainless-steel vacuum chamber 1* in an arrow direction shown in the figure, is sealed onto stainless-steel vacuum chamber 1* by welding the copper layers 3 on both sides together via a tin solder 4, thereby forming a vacuum chamber meeting the requirements of high vacuum degree; and if the vacuum chamber is made of copper (preferably oxygen-free copper), there is no need to spray a copper layer, and the open door 10-1 is directly welded and sealed on to the vacuum chamber with the tin solder 4.
FIG. 7 is a sectional structural diagram of a single-cavity insulating glass unit according to Embodiment 2, where an outer end of the spacer 2 is provided with a high-barrier epoxy resin adhesive 6-2, the epoxy resin adhesive 6-2 is used to be bonded with the glass panes 1 by replacing a butyl adhesive 6-1, the epoxy resin adhesive 6-2 is also coated on outer sides of the spacer 2 and inner sides of the glass panes 1, an air barrier film 5 is bonded onto the epoxy resin adhesive 6-2, then a silicone structural adhesive 6-3 is filled for plugging, and an air barrier film 5-1 is bonded onto an end of the insulating glass unit to seal the silicone structural adhesive 6-3.
FIG. 8 is a diagram showing sealing of laminated glass (including solar photovoltaic laminated glass) according to Embodiment 4, where an interlayer 8* is arranged in the middle of the laminated glass, for example, the interlayer 8* is a PVB (polyvinyl butyral) interlayer or an EVA (ethyl vinyl acetate) interlayer, and a gap between edge of two glass panes 1 on both sides (one side of the solar photovoltaic laminated glass may be a (PET) plastic backboard) of the laminated glass is coated with a high-barrier adhesive 6-2.

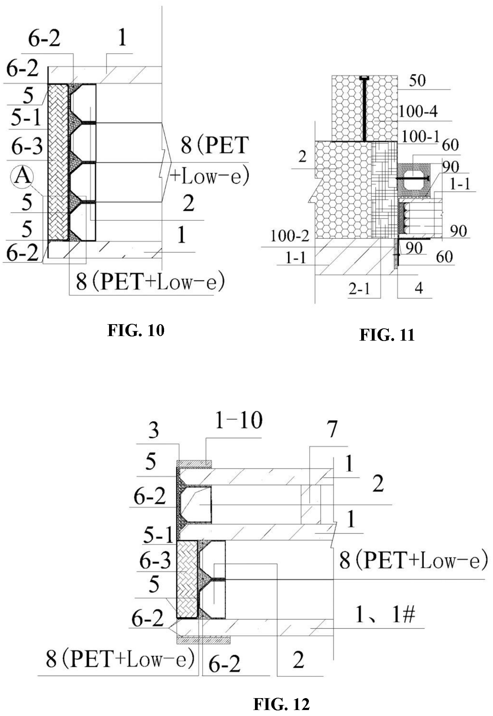

FIG. 9 is an enlarged view of a section A in FIG. 10, where an edge of a suspended film 8 is bonded to an outer side of a spacer 2 by means of an epoxy resin adhesive 6-2 and a double-sided adhesive tape 6-4 of a quick fixing adhesive, FIG. 9 shows that the double-sided adhesive tape 6-4 is located on a middle portion of an outer side of spacer 2, FIG. 9 further shows that upper and lower suspended films 8 are in lap joint and bonded; the epoxy resin adhesive 6-2 is also coated onto an outer side of the suspended film 8 and inner sides of the glass panes 1 for bonding an air barrier film 5 (pinhole-free anodized aluminum foil), a silicone structural adhesive 6-3 is coated on an outer side of the air barrier film 5, and an air barrier film 5-1 is also bonded onto an end of the insulating glass unit for sealing.
FIG. 10 is a sectional structural diagram of a four-cavity suspended-film insulating glass unit having four spacers 2 and three suspended films 8 according to Embodiment 2, where an epoxy resin adhesive 6-2 is coated to an outer side of each spacer 2, an outer side of each suspended film 8 and inner sides of upper and lower glass panes 1, and an air barrier film 5 is bonded onto the epoxy resin adhesive 6-2, then a silicone structural adhesive 6-3 is filled for plugging, and an air barrier film 5-1 is bonded to a periphery of an end of the insulating glass unit to seal the silicone structural adhesive 6-3.

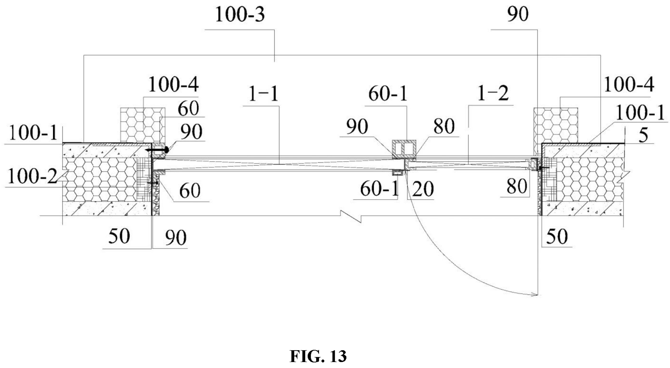

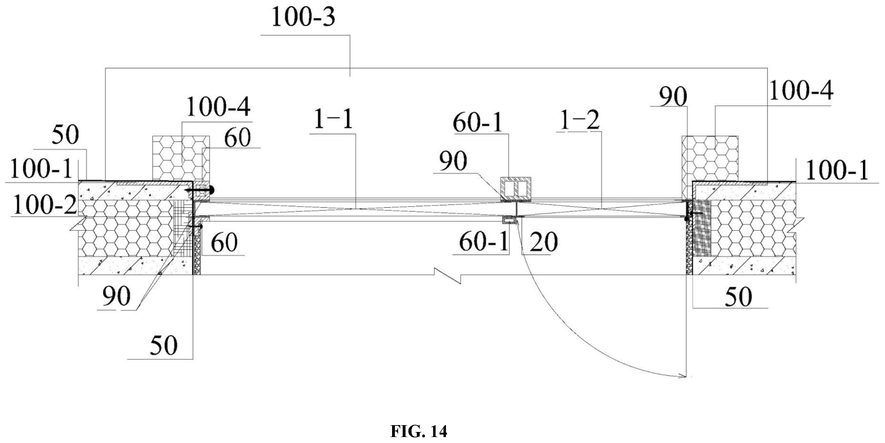

FIG. 11 is an enlarged view of a glass 1-1 of a fixed sash mounted at a thermal insulation layer of a window according to Embodiment 3, where the glass 1-1 of the fixed sash wrapped with foamed rubber sponge 90 is sandwiched between separated indoor and outdoor profiles 60,to directly mount the glass 1-1 of the fixed sash, eliminating a thermal bridge of the profiles of the fixed sash, the glass 1-1 shown in FIG. 11 is multi-cavity suspended-film insulating glass unit with a low heat transfer coefficient, a protective layer of an external thermal insulation wall in FIG. 11 is a thin-plastered insulation wall, and a waterglass fire-retardant adhesive or an intumescent fire-retardant coating is brushed on a thermal insulation window sill board 100-3 and a thermal insulation decorative line 100-4 around exterior of a window to prevent the spread of fire, and the outer protective layer may also be a plastered protective layer such as an aerated concrete board, outer leaf concrete (as shown in FIG. 13 and FIG. 14) or cement mortar.
FIG. 12 is a sectional diagram of an assembly of a vacuum insulating glass and double-cavity suspended-film insulating glass unit according to Embodiment 2, where a sealed and vacuumized vacuum insulating glass is prepared at first, and then the insulating glass unit is fabricated by bonding, an outer end of the vacuum insulating glass is provided with a sprayed layer 3, and the sprayed layer 3 is coated with a high-barrier epoxy resin adhesive 6-2 to bond an air barrier film 5; an outer side of the insulating glass unit is a glass pane 1 or acrylic (PMMA) sheet 1#, and a reinforcing bar 1-10 is bonded with an edge of the , glass pane 1 of the assembly with an epoxy resin adhesive to block ultraviolet rays, thereby ensuring the service life and enhancing the insulating glass unit.
FIG. 13 is a diagram of a horizontal section of a window mounting with a glass according to Embodiment 3, where two profiles 60 of the fixed sash of the window are arranged indoors and outdoors, and two profiles 60-1 of the mullion of the fixed sash of the window are arranged indoors and outdoors, and a foamed rubber sponge 90 of a cushioning and insulation material (such as U-shaped EPDM sponge) is arranged between the two profiles 60 and between the two profiles 60-1 of the mullion, a glass 1-1 of the fixed sash of the insulating glass unit, the vacuum insulating glass or vacuum-insulating glass assembly is sandwiched into the two profiles 60, and an edge of the fixed-sash glass pane 1-1 is wrapped with a U-shaped EPDM sponge for sealing and buffering, a glass 1-2 of an open sash of the insulating glass unit, the vacuum insulating glass or the vacuum-insulating glass assembly is mounted in a profile 80 of the open sash, and a rotating shaft (hinge) 70 of the open sash is connected to an embedded steel plate 100-1 in a side wall of the window; a rotary fixing member 20 is mounted in the profile 60-1 of the mullion arranged indoors, and the rotary fixing member 20 is used for clamping the open sash, and the glass of the open sash in FIG. 11 is mounted in the profile of the open sash, where it is not recommended to use the profile of open sash as its heat transfer.
FIG. 13 and FIG. 14 each are an outer thermal insulation wall mounted with a protective layer of aerated concrete board, or a prefabricated concrete sandwiched thermal insulation wall, where a difference between FIG. 14 and FIG. 13 is that the profile 80 of the open sash is cancelled and only the glass 1-2 of the open sash is mounted, and a rotating shaft (hinge) 70 of glass 1-2 of the open sash is connected to the embedded steel plate in the side wall of the window, which can eliminate the heat transfer of the profile of open sash and is recommended to use.
FIG. 11, FIG. 13 and FIG. 14 all show that basalt fiber reinforced polymer cloth 50, namely BFRP cloth, is bonded on the side wall of the window, where the BFRP cloth 50 is internally provided with an L-shaped embedded steel plate 100-1 and other embedded steel plates arranged outdoors; FIG. 11, FIG. 13 and FIG. 14 also show that insulation decorative lines 100-4 capable of bearing force are mounted on both sides of the window, an accessible window sill board 100-3 is mounted outdoors, and the embedded steel plate 100-2 is mounted indoors for mounting the profile of the fixed sash arranged indoors; FIG. 11, FIG. 13 and FIG. 14 also show two profiles 60 of the fixed sash of the window arranged indoors and outdoors, and two profiles 60-1 of the mullion or transom arranged indoors and outdoors are fixed to the embedded steel plates in the BFRP cloth 50 in the side wall of the window via screws; the glass 1-1 of the fixed sash wrapped with the U-shaped EPDM foamed rubber sponge 90 is sandwiched between two profiles 60 of the fixed sash arranged indoors and outdoors and between two profiles 60-1 of the mullion or transom of the fixed sash arranged indoors and outdoors; and FIG. 13 and FIG. 14 both show that a rotary fixing member 20 is locally mounted on the foamed rubber sponge on the profile 60-1 of the mullion arranged indoors to clamp the glass 1-2 or the profile 80 of the open sash.

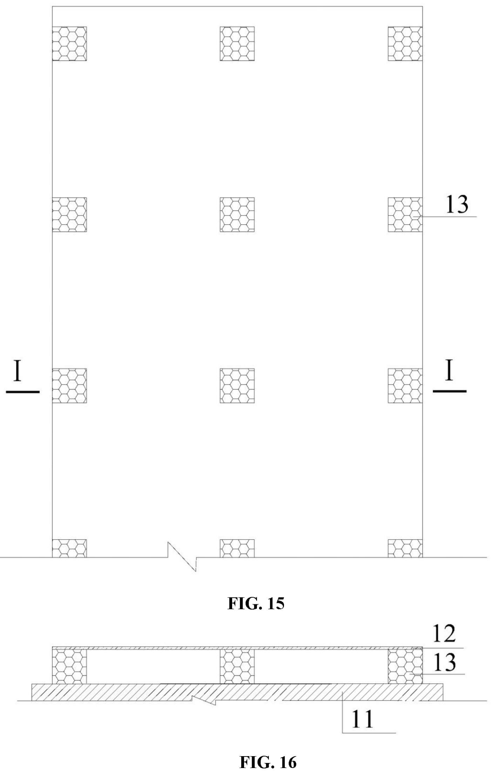

FIG. 15 is top view showing that blocks 13 are bonded onto a substrate 11 of concrete and a photovoltaic laminated glass 12 is bonded onto the blocks 13 according to Embodiment 5.
FIG. 16 is a sectional diagram of FIG. 15 taken along line I-I, where it is convenient for people to check and maintain the photovoltaic laminated glass 12 due to multiple blocks 13 mounted as supporting points.

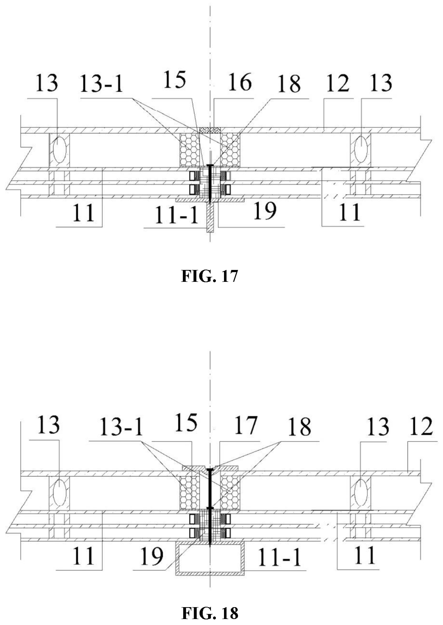

FIG. 17 is a diagram of a vertical section of a roof glass 11 mounted with photovoltaic laminated glass 12 according to Embodiment 5, where a roof glass 11 is used as a substrate, the roof glass pane 11, for example, is a multi-cavity suspended-film insulating glass unit or a vacuum-insulating glass assembly, which is collectively referred to as the roof glass, the roof glass 11 is mounted on a top chord angle steel 11-1 of a steel roof truss, and a thermal insulation material 19 (such as aerogel blanket) is filled in a joint between adjacent roof glasses; at the joint of the adjacent roof glasses, an adhesive is used to bond a metal plate 15 to the roof glass 11 for waterproof sealing; when a roof slope is large and a negative wind pressure is large, a detachable self-tapping and self-drilling screw (hereinafter referred to as screw) 18 penetrates through the metal plate 15 and the angle steel 11-1 to anchor them together, and an inner side of the screw 18 should be provided with a rubber cushion (aluminum foil is bonded around the rubber cushion to prevent ultraviolet rays) for waterproofing and sealing a drilling gap; blocks are mounted on an edge of the roof glass 11, where the block may be a strip-shaped foamed polyester (PET) block 13-1, and dot-shaped transparent polyester (PET) hollow blocks 13 can be mounted at the middle of the photovoltaic laminated glass 12, blocks 13 are used as supporting points of the photovoltaic laminated glass; a dot-shaped support made of the transparent plastic should also be mounted at a corresponding position during prefabrication of the insulating glass unit, or a thickness of a glass pane of the insulating glass unit should be thick, thereby bearing a pressure transmitted by the supporting point of the photovoltaic laminated glass, which can reduce the thickness of the glass pane of the photovoltaic laminated glass 12 and reduce the cost of the photovoltaic laminated glass. This is essentially equivalent to forming the insulating glass unit with the photovoltaic laminated glass and the roof glass at a construction site. Because a height of the block is much higher than an air space of the insulating glass unit, the adverse effect of heating of the photovoltaic laminated glass can be reduced, and it is convenient to mount a heat collecting tube or a ventilation tube; the joint between adjacent photovoltaic laminated glasses 12 can be bonded with a silicone structural adhesive for waterproofing and sealing. Mounting the photovoltaic laminated glass on the transparent energy-saving thermal insulation roof provides a simplified structure, ease of disassembly for maintenance, excellent waterproof sealing, and excellent insulation and energy conservation.
FIG. 18 shows a structural diagram of a horizontal section of a glass curtain wall mounted with a photovoltaic laminated glass 12 according to Embodiment 5, where the glass curtain wall is used as a substrate, a difference between FIG. 18 and FIG. 17 is that the roof is inclined or nearly horizontal, and the glass curtain wall is vertical, so screws 18 penetrates through a metal plate 15 and a steel joist 11-1 of an indoor curtain wall steel frame at intervals to anchor them together; it is also necessary to bond the metal plate 17 with silicone structural adhesive at the joint of the adjacent photovoltaic laminated glasses 12 for waterproofing and sealing, and the screw penetrates through the metal plate 17 and the mounted metal plate 15 to anchor them together, and a rubber cushion pad is added for waterproofing and sealing of a drilling gap. The metal plate 17 is usually a black metal plate with inward recess, which plays the role of decorating a separation gap.

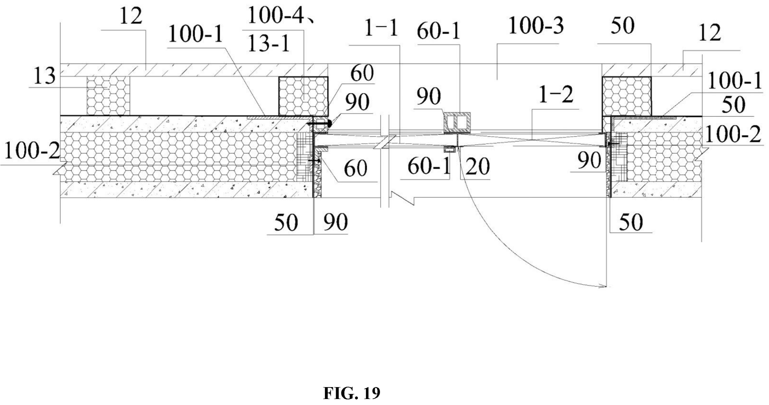

FIG. 19 is sectional diagram of a solar photovoltaic laminated glass 12 mounted on an energy-saving thermal insulation wall of FIG. 14 according to Embodiment 5, where BFRP cloth 50 is bonded to a window and an outer side of the window, or the BFRP cloth 50 is completely bonded to an external wall. Foamed polyester (PET) thermal insulation decorative lines and foamed polyester (PET) thermal insulation window sill boards which can bear load are mounted at the periphery of the window as strip-shaped blocks 13-1; when there is an embedded steel plate on the block 13 or the strip-shaped block 13-1, the BFRP cloth 50 should be bonded onto the block 13, and the embedded steel plate is located in the BFRP cloth 50, and the strip-shaped block 13-1 and the L-shaped embedded steel plate 100-1 of the window are fixed via screws; a connecting iron member of the solar photovoltaic laminated glass 12 is connected to the embedded steel plates in the thermal insulation decorative line protruding from a wall surface and the thermal insulation window sill board; the block 13 is bonded to the external wall with a silicone structural adhesive, or the strip-shaped block 13-1 and the block 13 are bonded to an outer protective layer of an outer thermal insulation wall with the silicone structural adhesive, then the photovoltaic laminated glass 12 is bonded to the block 13 and the strip-shaped block 13-1, and a structure and method for mounting the photovoltaic laminated glass is formed by bonding on the external wall and connecting by a steel member. The blocks 13 or strip-shaped blocks 13-1 are mounted on the wall without a window at a certain distance, and the photovoltaic laminated glass 12 is bonded with the block 13 and the strip-shaped block 13-1, and each photovoltaic laminated glass is connected to the embedded steel plate in the block 13 or strip-shaped block 13-1 at two points in horizontal and/or vertical directions.
FIG. 13, FIG. 14 and FIG. 19 all show that the thermal insulation layer is an organic thermal insulation layer 200, and the thermal insulation layer on a side of the window is a rock wool board 200-1, thereby increasing the fire prevention performance of the energy-saving thermal insulation wall.

In the accompanying drawings, the air barrier film 5 and various adhesives with different properties are drawn thick, but in fact they are particularly thin. The spacer 2 selected for the vacuum insulating glass or insulating glass unit in the accompanying drawings is a stainless-steel hollow spacer, but it is not limited to the stainless-steel hollow spacer, and can be selected as required.

### DETAILED DESCRIPTION OF THE EMBODIMENTS

Embodiment 1: with reference to FIG. 1 to FIG. 3, glass deep processing technology and mounting technology of this embodiment is an external sealing technology for a vacuum insulating glass or an insulating glass unit. The vacuum insulating glass includes a vacuum insulating glass which is fabricated via a current high-temperature kiln and may have a leakage rate, and further includes a vacuum insulating glass fabricated at a room temperature. Each of the insulating glass unit and the vacuum insulating glass fabricated at the room temperature includes a spacer material 2 (including a spacer 2), glass panes 1, and an epoxy resin adhesive 6-2. The spacer 2 of the vacuum insulating glass fabricated at the room temperature is a stainless-steel spacer with a height dozens of times that of a spacer material used in the vacuum insulating glass fabricated via the current high-temperature kiln which employs a low-melting-point solder for edge sealing, for example, the height of the stainless-steel spacer ranges from 10 mm to 20 mm. In the vacuum insulating glass fabricated at the room temperature, the stainless-steel spacer 2 is bonded with peripheries of two glass panes 1 of the vacuum insulating glass via the epoxy resin adhesive 6-2, a needed evacuation structure is mounted, and pillars 7 are bonded onto the glass panes 1 in a pattern (such as matrix arrangement), and a spacing between adjacent pillars 7 is determined through the structure calculation or testes. The peripheral sealing of the vacuum insulating glass or/and insulating glass unit employs the following structures and methods as required.
1. A copper layer 3 is sprayed on a peripheral section of each of two glass panes 1 of the vacuum insulating glass or a peripheral section of the vacuum insulating glass which is fabricated via the current high-temperature kiln and may have a leakage rate, pinhole-free copper foil 5 is welded onto the copper layer sprayed on the glass panes 1 with tin solder 4 for sealing. As the tin solder can only be welded with gold, silver and copper, with reference to FIG. 1 and FIG. 2, a middle portion of the copper foil 5 and the spacer 2 of the insulating glass unit or the vacuum glass fabricated at the room temperature are bonded together with an epoxy resin adhesive 6-2. This sealing technology mentioned above can not only make up for a possible leakage rate of the existing vacuum insulating glass, but also be used for sealing a periphery of the insulating glass unit and the vacuum insulating glass manufactured at the room temperature by welding the copper foil.
2. A material of the sprayed layer 3 is sprayed onto the peripheral section of the vacuum insulating glass which is fabricated via the current high-temperature kiln and may have a leakage rate or is sprayed onto an end section of the assembled vacuum insulating glass fabricated at the room temperature for circumferentially sealing with reference to FIG. 2 and FIG. 3. For example, the sprayed layer 3 is aluminum or copper. This sealing technology mentioned above can make up for poor peripheral sealing of the vacuum insulating glass which may have the leakage rate, which is simpler than welding of the copper foil and can save the tin solder.
3. The material of the sprayed layer 3 is sprayed onto the spacer 2 and the glass panes 1 at the periphery of the assembled vacuum insulating glass or insulating glass unit for sealing, and an outer side of the spacer 2 of the insulating glass does not need to be sealed with a silicone structural adhesive.

The sprayed layer 3 meets an adhesion requirement for the glass panes 1 and the spacer material 2.

During spraying, the glass panes 1 or semi-finished vacuum insulating glasses which have been assembled by an adhesive can be stacked together, and the spraying is carried out on outer peripheral ends of the glass panes 1 or the semi-finished vacuum insulating glasses. A thick paper tab that protrudes slightly beyond the edge is placed between the stacked glass panes 1 or between semi-finished vacuum insulating glasses, thereby preventing the sprayed layers from being connected together. After the spraying, the protruding paper tab is cut off or removed at a high temperature.

Because the "tin", belonging to minor metals, is essential in semiconductor industry and photovoltaic power generation, and the reserve of the tin is only enough for several decades, the tin solder should be used sparingly and conserved. Therefore, it is not recommended to employ the sealing technology 1).

Although this embodiment can be used for the sealing of the insulating glass unit, it is not recommended to use due to its complicated process.

It is recommended that the pillar 7 of the vacuum insulating glass is an acrylic (PMMA) cylindrical pillar (for example, the pillar 7 is bonded with UV adhesive). On an inner side of the glass pane 1 of the vacuum insulating glass at an outdoor side, there is a magnetron-sputtered Low-e coating, which can block most ultraviolet rays. In addition, a raw material of the acrylic (PMMA) cylindrical pillar should have an ultraviolet absorber, and the acrylic (PMMA) cylindrical pillar can meet the requirements of the service life.

Furthermore, there is a bevel on an outer side edge of the spacer 2 of each of the insulating glass unit and the vacuum insulating glass fabricated at the room temperature, there is a beveled surface on an inner side surface of the glass pane 1, or there is a small step parallel to an inner side of the spacer on the edge of the bevel or the beveled surface, as shown in FIG. 2 and FIG. 3, so that the sprayed layer 3 forms a triangular or trapezoidal section on the glass pane 1 and the stainless-steel spacer 2.

Furthermore, in order to further increase the service life of the sealing and protect the sprayed layer 3 from collision and damage, the sprayed layer 3 is fully coated with a high-barrier adhesive 6-2 that meets the requirements of high and low temperatures in a use environment. The high-barrier adhesive 6-2 is an epoxy resin adhesive or other adhesives that meet the barrier property and strength requirements, or an air barrier film 5 is bonded onto the sprayed layer 3, or the air barrier film 5 is bonded to an edge side of the vacuum insulating glass with a width not less than that of the spacer to prevent the ultraviolet rays from damaging the adhesive 6-2 for bonding the spacer 2, thereby increasing the durability. The air barrier film 5 is anodized pinhole-free aluminum foil or copper foil.

The glass pane 1 used in the vacuum insulating glass fabricated at the room temperature should employ homogeneous tempered glass. The tempered glass is easy to burst due to the containing of nickel sulfide impurities. The homogeneous tempered glass is obtained by carrying out homogenization treatment on the tempered glass at a high temperature (290°C ± 10°C) for 2 hours, which generally does not burst during use, and water vapor and other gases in the tempered glass are baked out during homogenization treatment, so that a residual gas in the vacuum insulating glass can be controlled within an allowable range. When the glass pane 1 of the vacuum insulating glass is laminated glass, an inner side of the laminated glass needs to be the homogeneous tempered glass, or the glass pane 1 is composite glass of the glass and acrylic board, which is also called a glass pane 1 for short.

The vacuum insulating glass fabricated via the current high-temperature kiln may employ the sealing technology of this embodiment, that is, a technology of welding the copper foil for sealing or spraying an aluminum layer and coating a high-barrier adhesive for bonding the air barrier film for sealing.

The spacer material 2 of the vacuum insulating glass is selected as follows.
1. The spacer 2 of the vacuum insulating glass is a stainless-steel hollow spacer with a height of 10 mm to 20 mm, and the pillar 7 of the vacuum insulating glass is an acrylic (PMMA) pillar 7 which has good transparency and can be used in a vacuum environment.
2. The spacer material 2 is an edge sealing material (for example, an edge sealing material which is 0.1 mm to 0.5 mm in height and about 12 mm to 15 mm in width) of a narrow vacuum layer bonded to the edges of two glass panes 1, and the pillar 7 in the vacuum insulating glass is a dot-shaped pillar made of, such as, stainless-steel and ceramics.

Furthermore, when fabricating dual-cavity or multi-cavity vacuum insulating glass, an interlayer 8 is also added, which is mounted between the two glass panes 1. The interlayer 8 is a glass pane or an acrylic (PMMA) board, and there is one or more interlayers 8, as shown in FIG. 5. FIG. 5 shows that an interlayer of the dual-cavity vacuum insulating glass is an acrylic (PMMA) board, and is on an outer periphery of the acrylic (PMMA) board is arranged with a stainless-steel bar 8-1 with a same thickness as the acrylic (PMMA) board and the epoxy resin adhesive 6-2 is used to bond the interlayer 8 and the stainless-steel bar 8-1 with the stainless-steel hollow spacers 2 on two sides. When spraying is carried out on the periphery of the vacuum insulating glass, the sprayed layer 3 is also sprayed onto an outer end of the interlayer 8 of the vacuum insulating glass, or sprayed onto the outer end of the stainless-steel bar 8-1 in a case that the interlayer 8 is the acrylic (PMMA) board. Then, the epoxy resin adhesive 6-2 is coated on the sprayed layer 3, and the air barrier film 5 is bonded onto the epoxy resin adhesive 6-2. The vacuum insulating glass is evacuated to form dual-cavity or multi-cavity vacuum insulating glass.

To speed up an evacuation speed of the vacuum insulating glass, the stainless-steel hollow spacer 2, the evacuation tube 9 and the cylindrical acrylic (PMMA) pillar 7 should be put in a vacuum chamber for pre-evacuation.

Furthermore, the following structures and methods are adopted for evacuation of the vacuum insulating glass fabricated at the room temperature and sealing of an evacuation port, which are selected as required.
1. The evacuation tube 9 is bonded at an evacuation position of the spacer 2 of the vacuum insulating glass with an adhesive (such as the epoxy resin adhesive 6-2), and an outer end of the evacuation tube 9 protrudes outside the vacuum insulating glass, as shown in FIG. 4. There are two options as follows for the evacuation tube 9, which can be selected as required.
   (1) The evacuation tube 9 is a thin-walled stainless-steel tube or an oxygen-free copper tube, or an outer surface of an outlet of the stainless-steel evacuation tube 9 is also sprayed with a copper layer 3.
   (2) The evacuation tube 9 is thick-walled low-melting-point tin or tin alloy tube. When the evacuation tube 9 being the thick-walled metal tube made of tin or tin alloy is connected to a vacuum pump, it is necessary to fabricate a copper flange meeting the vacuum technical requirements and weld the copper flange to a thick-walled low-melting-point metal tube with common solder, and then copper flange is rapidly connected to a stainless-steel flange of the vacuum pump. There may be a wearing layer on the surface of the copper flange to prolong the service life.
      A process of vacuumizing and sealing the evacuation tube 9 is as follows: after the pinhole-free copper foil 5 is welded onto the glass panes 1 or the copper layer 3 sprayed on the glass panes 1 for sealing, the tin solder 4 is used to weld the pinhole-free copper foil 5 to the copper layer 3 sprayed on the stainless-steel evacuation tube 9, to the oxygen-free copper evacuation tube 9, or to the thick-walled tin or tin alloy evacuation tube 9 to ensure reliable sealing around the evacuation tube 9. After vacuumizing meets the requirements, a non-evaporable Zr-V-Fe getter is activated, then the vacuumizing is carried out until meeting the requirements, and then a valve of the vacuum pump is closed. (1) In a case that the evacuation tube 9 is the thin-walled stainless-steel tube or an oxygen-free copper tube 9, the outlet of the thin-walled stainless-steel copper tube or oxygen-free copper tube 9 is clamped and flattened, and then the outlet of the evacuation tube 9 is sealed by welding of a welding machine and then cut off, it is recommended to perform continuous pressure spot welding using a cold welding machine (that is, one solder joint overlaps the previous one solder joint to form a continuous sealing weld. After the evacuation tube 9 is sealed by welding, the evacuation tube 9 is coated with the high-barrier adhesive 6-2, then the air barrier film 5 is bonded to the evacuation tube 9 and the sprayed layer 3 on each glass pane 1, and is in lap joint with an adjacent air barrier film 5 for sealing; or in a case that the evacuation tube 9 is the oxygen-free copper tube, the air barrier film 5 is welded onto the copper layers 3 on the glass panes 1 on both sides of the evacuation tube 9 as well as onto the adjacent copper foil 5 with the tin solder. (2) In a case that the evacuation tube 9 is a thick-walled low-melting-point evacuation tube 9, the thick-walled low-melting-point evacuation tube 9 is molten by remote heating (the epoxy resin adhesive 6-2 for bonding the spacer 2 is high-temperature-resistant epoxy resin adhesive), the thick-walled low-melting-point evacuation tube 9 softens under the heating and undergoes inward collapse under an external atmospheric pressure to seal a hole of the evacuation tube 9. After the evacuation tube 9 is sealed, the pinhole-free copper foil 5 is welded onto the copper layers 3 on the glass panes 1 on both sides of the evacuation tube 9, as well as the adjacent copper foil 5 and the evacuation tube 9. This evacuation method involves directly evacuating the vacuum insulating glass with a vacuum pump, followed by sealing.
2. The outer end of the evacuation tube 9 mounted on the spacer 2 does not protrude outside the vacuum insulating glass (not shown), or the evacuation port of the vacuum insulating glass is located on a surface of the glass pane 1 of the vacuum insulating glass (for example, at the corner), which is suitable for an edge sealing material of a narrow vacuum layer between the spacer 2 and the glass panes 1 bonded (not shown).

A process of vacuumizing and sealing is as follows: an outer surface of the outlet of the evacuation tube is sprayed with a copper layer 3 in advance, or an edge of the evacuation port of the glass pane 1 is locally sprayed with copper or silver in advance. After the pinhole-free copper foil 5 is welded onto the periphery of the vacuum insulating glass or an air barrier film 5 is bonded onto the sprayed layer 3 for sealing, the vacuum insulating glass being fabricated is placed into a normal-temperature vacuum chamber for vacuumizing, the gas released in the process of activating the non-evaporable Zr-V-Fe getter can be omitted, or when the Zr-V-Fe getter can be activated in the vacuum chamber by controlling high-frequency induction heating equipment by a manipulator, this following sealing method can be employed: the Zr-V-Fe getter is activated first and then the vacuum chamber is vacuumized to a vacuum degree meeting the requirements, then the tin solder is molten by a soldering iron to weld a copper sheet to the outer end of the evacuation tube 9 sprayed with the copper layer 3, or the tin solder is molten by the soldering iron to weld the evacuation port on the surface of the glass pane 1 for sealing (in the vacuum chamber, the tin solder can be molten by mean of the manipulator for welding). This evacuation method above involves placing the fabricated vacuum insulating glass into the vacuum chamber for evacuating and sealing.

This embodiment provides a variety of methods for vacuumizing and sealing the vacuum insulating glass, which can be selected as required.

Furthermore, a sealing technology and structure of a vacuum insulating glass fabricated at the room temperature are used to seal the vacuum chamber (including various vacuum equipment). The vacuum chamber is made of copper (preferably oxygen-free oxygen), or a copper layer 3 of a certain width (such as about 10 mm) is sprayed on an end side of the vacuum chamber 1*, as shown in FIG. 6, and a copper layer 3 of a certain width is also sprayed on an edge side of an open door 10-1. Components needing to be vacuumized are placed into the vacuum chamber 1* to be sealed, the open door 10-1 is inserted into the vacuum chamber 1*, and a common hot-melt solder 4 is coated onto the copper layers 3 on the open door 10-1 and the vacuum chamber 1* at a joint of the open door 10-1 and the vacuum chamber 1* or an oxygen-free copper joint is welded for sealing, thereby forming a seal on the vacuum chamber, that is, the vacuum chamber can be vacuumized to a required vacuum degree. When the open door 10-1 on the vacuum chamber needs to be opened, a weld of the joint between the open door 10-1 and the vacuum chamber 1* is cut off or/and de-soldered with the soldering iron, then the open door 10-1 is pulled out, and a same process is carried out for the next sealing. That is, the vacuum chamber is sealed by welding a common solder 4 coating on a side edge of the joint with the copper layers, thereby forming a vacuum chamber capable of achieving high vacuum degree.

The vacuum chamber with such a structure has the better sealing performance, and can be used for evacuating the components or materials that need to be evacuated in a high vacuum environment. For example, the fabrication of a semiconductor chip needs to prevent gas molecules from polluting the chip, the high vacuum chamber of this embodiment can be used as a vacuum chamber for fabricating the semiconductor chip, with simple fabrication and high vacuum degree. For another example, the stainless-steel hollow spacer, the cylindrical acrylic pillar and the evacuation tube in vacuum insulating glass fabricated at the room temperature should be placed into the vacuum chamber in advance for vacuumizing, thereby ensuring that the vacuum degree in the vacuum insulating glass can be maintained for a long time (not less than 25 years or longer). At present, the open door the of vacuum chamber is mostly sealed with rubber, and the vacuum degree can only reach several Pa to several hundred Pa.

When thermal insulation is needed for the vacuum chamber, an external wall and the open door of the vacuum chamber should be provided with insulation materials.

Embodiment 2: in the glass deep processing technology and mounting technology of this embodiment, during fabrication of insulating glass unit, it not necessary to remove a Low-e coating on an edge of each glass pane and a Low-e coating on an edge of a (PET) polyethylene terephthalate film, so that the sealing of the insulating glass unit is enhanced, thereby increasing service life of the insulating glass unit, as shown in FIG. 7, FIG. 9 and FIG. 10. A glass pane 1 of the insulating glass unit is a common glass, a safety glass, and a glass coated with a film on one or two of the inner and outer sides thereof, or the glass pane 1 is further bonded with a coated (PET) film, or one or two of the glass panes 1 on two sides of the insulating glass unit can be replaced with an acrylic (PMMA (polymethyl methacrylate)) board 1#. The spacer 2 of the insulating glass unit may be a common spacer in which the moisture-absorbing desiccant such as 3A molecular sieve may be provided, and an outer side of a section of the spacer 2 of the insulating glass unit may be provided with a bevel. Interlayers 8 are provided in the insulating glass unit to fabricate dual-cavity or multi-cavity insulating glass unit. The interlayer 8 is a glass pane or an acrylic (PMMA) board, or the interlayer 8 is an acrylic hollow board, and/or the interlayer 8 is a (PET) suspended film 8. As shown in FIG. 9 and FIG. 10, the suspended film 8 is a Low-e coating-coated (PET) film, or a (PET) film without a coating; and the interlayer 8 may be transparent, semi-transparent, colored or frosted. Therefore, the technology of not requiring the removal of the Low-e coating on the edge of the glass pane and the removal of the Low-e coating on the edge of a (PET) film is as follows: an epoxy resin adhesive 6-2 is coated on the Low-e coating on the edge of the glass pane 1 for replacing a butyl adhesive 6-1 (that is, there is no need to use the butyl adhesive), so as to bond with the spacer 2, or the epoxy resin adhesive 6-2 is coated on the butyl adhesive 6-1 on the Low-e coating and the spacer 2 (that is, the butyl adhesive is retained but is further coated with the epoxy resin adhesive for bonding). That is, the Low-e coatings on all bonding surfaces are bonded with the epoxy resin adhesive. The Low-e coating on the edge of the glass pane and the Low-e coating on the suspended film 8 do not need to be removed, and the epoxy resin adhesive meets requirements (strength requirement) of high and low temperature resistance in a use environment. No matter what technology is used to mount the glass pane 1 or the suspended film 8, as long as the epoxy resin adhesive is bonded onto the Low-e coating without the removal of the Low-e coatings on the glass pane and the (PET) film, which belongs to the scope of protection of the present disclosure.

The suspended-film insulating glass unit includes an insulating glass unit with coated (PET) suspended film or uncoated (PET) suspended film. The heat transfer coefficient of the insulating glass unit may also be reduced even if the uncoated (PET) suspended film is mounted, but the (PET) suspended-film with the Low-e coating has better energy-saving effect. The suspended-film insulating glass unit has light weight, good sound insulation, less occupied space and good ultraviolet blocking performance.

Furthermore, the following technologies are adopted to increase the sealing of the insulating glass unit.
1. The epoxy resin adhesive 6-2 is coated to an outer side of the spacer 2, an outer side of the mounted suspended film 8 and an inner side of an end of each glass pane 1; an air barrier film 5, which is anodized aluminum foil, is bonded onto a surface of the epoxy resin adhesive 6-2, it is preferable that the anodized aluminum foil is pinhole-free anodized aluminum foil; and at a corner of glass pane 1, the air barrier film 5 can be slightly cut off on both sides near the glass panes 1, the corner of the glass pane may locally do not bonded with the air barrier film 5, or another small air barrier film 5 is bonded onto the corner of the glass pane, forming fundamental sealing of an air space of the insulating glass unit by using the air barrier film 5 of the anodized aluminum foil. With the sealing of the air barrier film 5 of pinhole-free anodized aluminum foil, the external vapor, oxygen and oil gas and other gases cannot enter the air space, thus it is impossible to destroy the Low-e coating on the glass pane 1 or the suspended film 8. Afterwards, a silicon structural adhesive 6-3 is filled by bonding the silicon structural adhesive 6-3 with a U-shaped air barrier film 5 mounted in the insulating glass unit.
2. When an inert gas is injected into the insulating glass unit, the sealing of a drilled hole is enhanced. The insulating glass unit is drilled to form a hole, and the drilled hole passes through the silicone structural adhesive 6-3 and the air barrier film 5 on an inner side of the silicone structural adhesive 6-3, and then passes through the epoxy resin adhesive 6-2 and the spacer 2 bonded to an inner side of the air barrier film 5, or also passes through the (PET) suspended film 8 bonded on an outer side of the spacer 2 in a case that the suspended film 8 is presented. An original gas in the air space is evacuated while the inert gas is injected. After the injected inert gas meets the requirements, the epoxy resin adhesive 6-2 or the silicone structural adhesive 6-3 is coated onto a hole for injecting the inert gas and a hole for evacuating the original gas in the air space for sealing (it is also possible to sealing the holes temporarily with the silicone structural adhesive), or the drilled holes are locally bonded with the air barrier film 5 for sealing.
   The insulating glass unit curtain wall may employ the insulating glass unit motioned above, when the insulating glass unit curtain wall is mounted, the silicone structural adhesive is injected into a gap of the insulating glass curtain wall, and then the air barrier film of pinhole-free anodized aluminum foil is mounted on both indoor and outdoor sides of the curtain wall at the silicone structural adhesive for gas sealing, with reference to Embodiment 3.
3. A high-barrier epoxy resin adhesive 6-2 is also coated onto an end section of the glass pane 1 of the insulating glass unit, and an air barrier film 5-1 is bonded to the end section of the glass pane 1 for sealing and bonded to the silicone structural adhesive 6-3 (the silicone structural adhesive is not necessarily coated with the epoxy resin adhesive, and the air barrier film 5-1 may be directly bonded to the silicone structural adhesive), or the air barrier film 5-1 is bonded to an edge side of the insulating glass unit by a certain width. The air barrier film 5-1 is an anodized aluminum foil, or a plastic film or composite film meeting the requirement of barrier property. The non-curtain insulating glass unit mounted on the window should be bonded with the air barrier film 5-1 for sealing, thereby increasing the service life of the silicone structural adhesive 6-3.

Furthermore, the sealing technology for bonding the air barrier film to the insulating glass unit can be used in the sealing of an electronic product, where the air barrier film is bonded to a surface of an adhesive for encapsulating the electronic product, so as to prevent water vapor, oxygen or other harmful gases from entering the electronic product and increase the durability of the electronic product, which belongs to equivalent replacement. That is, the electronic product is used to replace the insulating glass unit, and a sealing adhesive for the electronic product is the epoxy resin adhesive or other encapsulating adhesives.

When fabricating the suspension film insulating glass unit, the suspension film 8 can be manually stretched. When fabricating an insulating glass unit with a relatively large area, the following method can be used to stretch the suspension film 8: the side length of the suspension film 8 is greater than the length of the outer frame of the spacer 2; and the suspension film 8 are clamped by opposite electromagnetic plates/strips arranged for bidirectional stretching (either four-edge or two-edge stretching).

Furthermore, the suspended film 8 is mounted by means of a quick bonding adhesive 6-4 and the epoxy resin adhesive 6-2, and an edge of the suspended film 8 is bonded with an upper surface and an outer side surface of the spacer 2, as shown in FIG. 9. A double-sided adhesive tape 6-4 of the quick bonding adhesive is mounted on the outer side of the spacer 2 in advance, and after the spacer 2 is bonded with the glass panes 1, when the Low-e coating is located on a lower surface of the suspended film 8, the epoxy resin adhesive 6-2 is coated on the upper surface of the spacer 2 to be bonded with the lower surface of the suspended film 8, or the epoxy resin adhesive 6-2 is directly coated for bonding without using a butyl adhesive 6-1. When no Low-e coating is located on the lower surface of the suspended film 8, the epoxy resin adhesive 6-2 does not need to be coated on the upper surface of the spacer 2, and the suspended film 8 can be bonded with the butyl adhesive 6-1 or the epoxy resin adhesive 6-2; the epoxy resin adhesive 6-2 is also coated onto a side edge of the spacer 2. Then a protective film on a surface of the double-sided adhesive tape 6-4 is torn off (the selected epoxy resin adhesive 6-2 is relatively viscous and cannot flow onto the double-sided adhesive tape). The suspended film 8 is stretched, and the suspended film 8 is bonded with the upper surface of the spacer 2. Then the suspended film 8 is bent by 90 degrees, and the suspended film 8 is bonded with the epoxy resin adhesive 6-2 on an upper half part of the side surface of the spacer 2 and the double-sided adhesive tape 6-4 on the middle of the spacer 2, and then is bonded with the epoxy resin adhesive 6-2 on a lower half part of the side surface of the spacer 2, thereby bonding and fixing the suspended film 8 immediately and quickly. The spacer 2 and the suspended film 8 in each air space are mounted according to the number of air spaces of the insulating glass unit until an outer glass pane 1 is mounted, and then the insulating glass unit is sealed by using the foregoing sealing technology.

The suspended film 8 first bonded on the spacer 2 can be in lap joint and bonded onto the glass pane 1, and then the spacer 2 and the suspended film 8 are mounted continuously, and each suspended film 8 is in lap joint and bonded to the adjacent suspended film 8 bonded outside the lower spacer 2 until the uppermost suspended film 8 is mounted, and then the uppermost spacer 2 is mounted and the glass pane 1 is installed. Small holes should be punched in each suspended film 8 to ensure the air pressure balance between the air spaces when the inert gas is injected. Then, the epoxy resin adhesive 6-2 is coated on a side surface of the uppermost spacer 2, the suspended film 8 at the outer side of each spacer 2, and an inner side surface of an end of the glass pane 1, and the air barrier film 5 of pinhole-free anodized aluminum foil is bonded with the epoxy resin adhesive 6-2. Then, a U-shaped section of a peripheral end of the insulating glass unit is filled with the silicone structural adhesive 6-3 to be bonded with the air barrier film 5, or the air barrier film 5-1 with better barrier property is bonded to the outer end section of the insulating glass unit and an outer surface of the silicone structural adhesive 6-3, thereby completing the fabrication of the suspended-film insulating glass unit.

If the mounted suspended film 8 is not tight and has an uneven surface, the PET suspended film 8 can be baked with an infrared baking lamp to shrink, tighten and flatten it.

It is recommended that the spacer 2 of the insulating glass unit is a stainless-steel hollow spacer, which has high strength and stiffness, a linear expansion coefficient less than that of an aluminum alloy hollow spacer. A heat transfer coefficient of the stainless-steel hollow spacer is only 1/14-1/12 of that of the aluminum alloy hollow spacer, thus the energy saving and thermal insulation of the stainless-steel hollow spacer are not worse than that of a warm-edge spacer.

Because there is no profile restriction on the insulating glass unit of curtain wall of the existing building, the original insulating glass unit can be disassembled and fabricated into the suspended-film insulating glass by the sealing technology described above, which can greatly reduce the heat transfer of the glass curtain wall of the existing building and solve the serious problem of high energy consumption of the current glass curtain wall. The insulating glass unit for the curtail wall can be fabricated at the project site, or transported to the workshop of an insulating glass unit enterprise for fabrication since the suspended-film insulating glass unit of this embodiment is simple to fabricate and does not need complicated equipment and conditions.

The vacuum insulating glass and the insulating glass unit are bonded and connected to fabricate vacuum-insulating glass assembly, where the vacuum insulating glass is vacuum insulating glass fabricated at the room temperature or vacuum insulating glass fabricated via a high-temperature kiln, as shown in FIG. 12. It is preferable to bond the vacuum insulating glass onto a periphery of the insulating glass unit into a whole with the air barrier film 5 (such as anodized aluminum foil), and the air barrier film 5-1 for bonding the insulating glass unit is in lap joint and bonded with the air barrier film 5 for bonding the vacuum insulating glass to increase the connection strength between the components.

Furthermore, the insulating glass unit or vacuum-insulating glass assembly is enhanced. There are three enhancement measures as follows, one or more of which are selected as required.
1. When fabricating the insulating glass unit, vacuum insulating glass or vacuum-insulating glass assembly with larger sizes, reinforcing bars are bonded at proper positions in a cavity of vacuum insulating glass or the insulating glass unit with the silicone structural adhesive, and the reinforcing bar is used as a waist beam (or called a reinforcing rib) of the insulating glass unit or the vacuum insulating glass for reinforcement. The vacuum insulating glass is vacuum insulating glass fabricated at the room temperature, and the reinforcing bar is a hollow plastic bar (such as PMMA bar) or a stainless-steel bar (such as I-shaped thin-walled stainless-steel bar), which is not shown. The insulating glass unit or vacuum insulating glass is divided into two or more areas, and the separated reinforcement bars are formed with holes, facilitating pressure equalization between both sides of large-scale glass. The stress of the insulating glass unit or vacuum insulating glass under the action of a wind pressure can be regarded as the stress of an insulating glass unit or vacuum insulating glass with small size, which can reduce a thickness of the glass pane of the insulating glass unit or vacuum insulating glass, so that the fabrication and mounting are simple, particularly, for the vacuum insulating glass that should not have too many specifications and too small sizes.
2. The epoxy resin adhesive or silicone structural adhesive is used to bond a reinforcing bar 1-10 on the surface of the glass pane at an outer side (all or part of the periphery, as shown in FIG. 12) and/or the waist beam, where the reinforcing bar is bonded in the cavity described above, of the insulating glass unit or vacuum insulating glass or vacuum-hollow glass assembly for reinforcement. The reinforcing bar 1-10 is a thin stainless-steel bar, an aluminum alloy bar, a wood bar or other bars with high strength. The reinforcing bars at different positions can be made of different materials, and decorative patches on the outer surfaces of the reinforcing bars made of different materials should be coordinated. According to calculation based on a bending moment and shear force borne by the insulating glass unit or vacuum insulating glass or vacuum-insulating glass assembly, the material is selected, and the specification of the bonded reinforced bar is determined. The adhesive should meet a bonding strength and ensure the safety force-bearing requirement, or a force-bearing test is also carried out on a component for determining the specification of the bonded reinforced bar. The bonded reinforced bar is essentially equivalent to reinforcing bars inside and outside the insulating glass unit or vacuum insulating glass or vacuum-hollow glass assembly, which can increase bending bearing stiffness and bending bearing capacity, thereby forming a composite member with an integrated force-bearing function.

Frosting at a position of the glass pane where the reinforcing bar is bonded can increase a bonding adhesion force. This enhancement technology can reduce or avoid the use of excessively thick glass for wind pressure resisting, reduce the weight of the glass and reduce the energy consumption during glass fabrication.

Embodiment 3: a glass deep processing technology and mounting technology of this embodiment is a mounting method of glass, as shown in FIG. 11, FIG. 13 and FIG. 14. The glass includes a single glass pane, an insulating glass unit, a vacuum insulating glass, or a vacuum-insulating glass assembly. The vacuum insulating glass includes vacuum insulating glass fabricated at a room temperature, and further includes vacuum insulating glass fabricated via a high-temperature kiln. The glass further includes an acrylic (PMMA) board, or a hollow acrylic (PMMA) board. The mounting method relates to a mounting method for eliminating a thermal bridge of a fixed sash or cancelling a profile of the open sash and eliminating a thermal bridge of the profile of the open sash, a mounting method for changing the heat transfer of a gap of the open sash from convective air to static air to reduce heat transfer, or a mouthing method for prolonging service life of a silicone structural adhesive for the insulating glass unit of the curtain wall. The glass is mounted by one or more of the following methods as required.
1. A position for mounting a window which is not recommended to use due to the presence of a thermal bridge of profile or a glass which is recommended to use due to the absence of a window profile is located within a width of a thermal insulation layer at a door/window section, forming a continuous structure between a window glass thermal insulation layer and a wall surface thermal insulation layer. As the glass with the low heat transfer coefficient is equivalent to the thermal insulation layer, the influence of outdoor temperature on an indoor temperature is reduced. The glass with the low heat transfer coefficient is used for thermal insulation of an indoor base wall at a window side, thereby eliminating a thermal bridge of the indoor base wall.
2. As shown in FIG. 13 and FIG. 14, a mounting method for a glass of the fixed sash is: a BFRP (basalt fiber-reinforced plastic) cloth 50 is bonded onto a door/window of a wall, and the BFRP cloth 50 is internally provided with an embedded steel plate bonded by an epoxy resin adhesive or anchored by a steel bar. A profile 60 of the fixed sash arranged outdoors and an outdoor embedded steel plate 100-1 of the window are fixed by a detachable self-tapping and self-drilling screw (hereinafter called a screw), and a profile 60 of the fixed sash arranged n indoors and an indoor embedded steel plate 100-2 of the window are fixed by the screw; and/or the profile 60 of the fixed sash is bonded and mounted via the epoxy resin adhesive, and the indoor and outdoor embedded steel plates should not be connected. Steel plates at both ends of profiles 60-1 of the mullion or transom arranged indoors and outdoors are connected to the embedded steel plates in the BFRP cloth 50 via the screws, or bonded with the epoxy resin adhesive. There is foamed rubber sponge 90 in the middles of the two separated profiles 60 of the fixed sash of the window arranged indoors and outdoors and the profiles 60-1 of the mullion or the transom. The foamed rubber sponge 90 is, for example, the U-shaped EPDM sponge or other sponge meeting the use requirements, thereby playing a role of buffering, thermal insulation and sealing. It is suggested to thicken the outside foamed rubber sponge at a heating provision region, thereby reducing the influence of the outdoor temperature on the edge of the insulating glass unit. The glass 1-1 of the fixed sash peripherally wrapped with the foamed rubber sponge 90 is clamped between the two separated profiles 60 of the fixed sash of the window arranged indoors and outdoors and between the separated profile 60-1 of the mullion or transom arranged indoors and outdoors. An outdoor edge of the foamed rubber sponge 90 is coated with a silicone sealant for waterproofing, and an indoor edge of the foamed rubber sponge 90 is coated with a silicone sealant or glass cement for sealing. The foamed rubber sponge 90 is used to replace a current multi-channel EPDM rubber sealing strip for sealing, and the convection air in the current EPDM sealing strips is changed into static air in the foamed rubber sponge, thereby greatly reducing the heat loss from a window gap.
3. A mounting method for a glass of the open sash is as follows: the glass 1-2 of the open sash can be mounted in a profile 80 of the open sash which is not recommended to use, as shown in FIG. 13, or the glass1-2 of the open sash is directly mounted without the profile of the open sash which is recommended to use, as shown in FIG. 14. A hinge 70 (or a rotating shaft) and an handle for opening the open sash are bonded on the glass 1-2 of the open sash with the epoxy resin adhesive, or mounted on the profile 80 of the open sash. The hinge 70 (or rotating shaft) bonded on the glass 1-2 of the open sash or the hinge 70 mounted on the profile 80 of the open sash is connected to the indoor embedded steel plate 100-2 of the window via screws, and the indoor and outdoor embedded steel sheets should not be connected. A decorative strip can be bonded to an inner side of the glass 1-2 of the open sash, and an thermal insulation decorative strip should be adopted in the heat provision region. For example, the thermal insulation decorative strip is a PVC foamed wood-grain thermal insulation decorative strip, the edge of the decorative strip covers the gap between the open sash and the fixed sash. A waterproof strip for guiding rainwater to flow outwards is bonded to an outdoor side of the glass 1-2 of the open sash, a rotary fixing member 20 is mounted inside or outside the profile 60-1 of the mullion or transom arranged indoors, which is used for clamping the open sash when closing the profile of the open sash or the glass 1-2 of the open sash. The foamed rubber sponge 90 (such as EPDM sponge) is mounted in a gap around the open sash or the glass 1-2 of the open sash for sealing. The foamed rubber sponge 90 is used to replace a current multi-channel ethylene propylene diene monomer sealing strip for sealing, which changes convection air in the current EPDM sealing strips into static air in the foamed rubber sponge, thereby greatly reducing the heat loss from a window gap.

As described in Embodiment 2, a total tensile force of the epoxy resin adhesive and the silicone structural adhesive is 620 kg/m. Inner and outer glass panes of the insulating glass unit can be firmly connected together by adding the epoxy resin adhesive for bonding and sealing, and the glass panes can be prevented from being separated, which results in falling off of the glass panes. Therefore, the profiles of the open sash can be canceled and the safety of the panes of the open sash can be ensured still. Therefore, it is recommended to eliminate the profiles of the open sash and directly mount the glass, as shown in FIG. 14, which can greatly reduce the heat transfer coefficient of the window.

The mounting method for glass enables the thickness of the mounted insulating glass unit or the vacuum-insulating glass assembly to be not limited, and provides conditions for mounting thicker multi-cavity suspended-film insulating glass unit with the low heat transfer coefficient.

4. When the insulating glass units are mounted to form a glass curtain wall, air barrier films 5-1 are bonded on indoor and outdoor sides of a silicone structural adhesive filled in a gap of the glass curtain wall. The air barrier film 5-1 is black anodized aluminum foil and can play a role of decoration. The air barrier films 5-1 can protect the silicone structural adhesive filled in the gap of the curtain wall and the silicone structural adhesive at the periphery of the insulating glass unit from corrosion of water vapor, oxygen, salt spray, sulfur dioxide, and the like, or the air barrier film 5-1 is further bonded on an edge side of the insulating glass unit to cover an adhesive for bonding the spacer 2, thereby protecting the adhesive for bonding the insulating glass unit of the curtain wall from ultraviolet rays. When the reinforcing bars 2 are bonded to the periphery of the insulating glass unit of the curtain wall, there is no need to bond the air barrier film 5-1 to the side edge of the insulating glass unit.

When mounting the insulating glass unit, vacuum insulating glass or vacuum-insulating glass assembly on a facade of horizontal window array in frame structure (where such façade with horizontal window array is mostly a public building). To reduce the number of drawings in this present disclosure, a horizontal sectional diagram of FIG. 13 and FIG. 14 is rotated by 90 degrees, which means a vertical sectional diagram of mounting the insulating glass unit, vacuum insulating glass or vacuum-insulating glass assembly on the facade of the horizontal window array. Because there is relative horizontal displacement between upper and lower external wall panels of a high-rise building with the horizontal window array, an upper portion of the insulating glass unit or vacuum insulating glass or vacuum-insulating glass assembly is hung, and a lower portion thereof is mounted in a groove on the lower external wall panel. The groove is filled with a silane modified polyether adhesive (MS adhesive) with good elasticity, good waterproof and good sealing. The upper portion of the insulating glass unit or vacuum insulating glass or vacuum-insulating glass assembly can be bonded with the MS adhesive to adapt to a larger horizontal displacement between the upper and lower external wall panels. A steel skeleton (such as stainless steel skeleton) extending out may also be mounted indoors to bear the glass.

In FIG. 13 and FIG. 14, the BFRP cloth 50 is bonded and mounted to a side wall of the window, and the BFRP cloth 50 is also bonded to an indoor base wall and an outer protective layer. A bonding width of the BFRP cloth is designed to satisfy that a lateral tensile test value of the BFRP cloth is not less than a maximum shear force value borne by the corner of the window. The BFRP cloth has a tensile strength 10 times to more than ten times that of steel, and a thermal conductivity of not higher than that of the foamed polystyrene, so the BFRP cloth does not increase heat transfer when mounted at the window. The embedded steel plate 100-1 is bonded in the BFRP cloth 50 around an outer corner of the window, a prefabricated thermal insulation window sill board 100-3 and a thermal insulation decorative line 100-4 are bonded with the side wall of the window, and are connected to the embedded steel plate 100-1 around the window via screws, so that the thermal insulation window sill board and the thermal insulation decorative line can form a load-bearing thermal insulation window sill board and a force-bearing thermal insulation decorative line. The profile 60-1 of the mullion or/and transom of the window in FIG. 13 and FIG. 14 can be connected to the embedded steel plate in the load-bearing thermal insulation window sill board mounted outside a main wall and the force-bearing thermal insulation decorative line. Mounting the profile 60-1 of the mullion or/and transom of the window outside the window can ensure the structural safety.

Embodiment 4: a glass deep processing technology and mounting technology in this embodiment refer to a sealing technology of laminated glass. The laminated glass includes a laminated glass mounted on a door/window and a curtain wall of a building, and further includes a solar photovoltaic laminated glass. The solar photovoltaic laminated glass includes a crystalline-silicon-battery-type solar photovoltaic laminated glass and a thin-film-battery-type solar photovoltaic laminated glass. The laminated glass is sealed by a introduced high-barrier adhesive, where the high-barrier adhesive is an epoxy resin adhesive 6-2 meeting the requirements of high and low temperature resistance, or other adhesives meeting the requirements of high barrier property. A weak portion of the laminated glass which may be air-permeable is coated with the epoxy resin adhesive 6-2 for sealing, for example, the epoxy resin adhesive is coated to a peripheral gap between ends of two glass panes of the laminated glass; or when one side of the solar photovoltaic laminated glass is a (PET) plastic backboard 1#, the epoxy resin adhesive is coated to a peripheral gap between ends of the plastic backboard 1# and the glass pane 1; and/or a periphery of an interlayer in the middle of the laminated glass is shortened by a certain width, and the epoxy resin adhesive 6-2 is injected into a gap between edges of the laminated glass, as shown in FIG. 8; and/or an air barrier film 5 is bonded to a side edge of the laminated glass by a certain width with the epoxy resin adhesive 6-2 to block ultraviolet rays; or an aluminum alloy is bonded to a side edge of the solar photovoltaic laminated glass with the epoxy resin adhesive 6-2 to block ultraviolet rays; or the epoxy resin adhesive 6-2 is coated to an outer side or an inner side of a transparent backboard of the solar photovoltaic laminated glass; or when the solar photovoltaic laminated glass is cracked by hail or other external forces, the epoxy resin adhesive is coated to infiltrate into a crack for repairing; or spraying is carried out on a peripheral section of the laminated glass to form a sprayed layer, the epoxy resin adhesive 6-2 is coated on the sprayed layer, and then the air barrier film 5 is bonded on the periphery of the solar photovoltaic laminated glass for sealing. The air barrier film 5 is anodized aluminum foil or a composite film of aluminum foil, and it is preferable to employ pinhole-free anodized aluminum foil. The epoxy resin adhesive 6-2 meeting the sealing requirement of the insulating glass unit can be used to seal the laminated glass. When the epoxy resin adhesive 6-2 is coated to an outer side or inner side of the transparent backboard of the solar photovoltaic laminated glass, or when the solar photovoltaic laminated glass is cracked by hail or other external forces, the epoxy resin adhesive is coated to infiltrate into a crack for repairing, saponifiable chlorine in the epoxy resin adhesive should be limited. This embodiment can be used for sealing laminated glass used in new projects, and can also be used for adding the seal to the laminated glass put into production.

At present, the edge of the solar photovoltaic laminated glass is sealed with the silicone sealant. For example, Article 5.9 in Sichuan Engineering Construction Standard Design Atlas "Building-Integrated System Construction with Cadmium Telluride Photovoltaic Glass" -- Chuan 2021J153TJ stipulates that the silicone adhesive and sealing material used in photovoltaic glass system should comply with the relevant provisions of the current standard "Silicone and Modified Silicone Sealants for Building" -- GB/T14683. As can be known from Embodiment 2, the sealing performance of the butyl adhesive is worse than that of the epoxy resin adhesive, and the sealing performance of the silicone sealant is only 1/6 of that of the butyl adhesive, so the sealing performance of the edge of the existing photovoltaic laminated glass is poor.

Furthermore, a vacuum insulation panel (VIP) and a super thin panel (STP) vacuum insulation panel are used to replace the laminated glass. After hot-melt edge sealing at a joint of the VIP and STP vacuum insulation panel, the high-barrier epoxy resin adhesive 6-2 is coated to edges of the sealing sides of the VIP and STP vacuum insulation panel, or pinhole-free anodized aluminum foil is bonded to enhance the edge sealing, where the epoxy resin adhesive meets the requirements of high and low temperature resistance.

Embodiment 5: a glass deep processing technology and mounting technology in this embodiment refers to a mounting method of solar photovoltaic laminated glass. The solar photovoltaic laminated glass includes a thin-film-battery-type photovoltaic laminated glass and a crystalline-silicon-battery-type photovoltaic laminated glass. An assembly prepared by using the mounting method of solar photovoltaic laminated glass includes a substrate 11, solar photovoltaic laminated glass 12, an adhesive, and blocks 13. The mounting method of solar photovoltaic laminated glass includes: bonding the blocks 13 between the solar photovoltaic laminated glass 12 and the substrate 11 with a silicone structural adhesive, the bonded blocks 13 are used for replacing all or part of the iron members. The block 13 is a dot-shaped block 13, or strip-shaped block 13-1. The substrate 11 is a non-transparent substrate as shown in FIG. 15 and FIG. 16, such as concrete on the roof, or a concrete slab, a metal plate, or other panels on a support frame for a solar photovoltaic plant constructed in open field or over water, as well as concrete or masonry on the external wall, or an outer protective layer of an outer thermal insulation wall or a prefabricated sandwich thermal insulation wall meeting the fire safety, as shown in FIG. 19. Alternatively, the substrate is glass, such as roof glass pane, curtain wall glass, or glass mounted on the external wall, as shown in FIG. 17 and FIG. 18. It is recommended that the block 13-1 mounted at the edge of the non-transparent substrate 11 and the transparent substrate 11 is a foamed polyester (PET) block, the block 13 on the transparent substrate 11 is a transparent polyester (PET) block. The polyester (PET) can meet a requirement of working at 120°C and a low-temperature environment for a long time. The foamed polyester (PET) has high strength, excellent durability and a certain elasticity. When the substrate 11 is the roof glass or the glass curtain wall, it is preferable that the block at the edge of the roof glass or glass curtain wall is a strip-shaped foamed polyester (PET) block 13-1, and at the middle portion of the roof glass or glass curtain wall is a dot-shaped transparent hollow plastic block 13. The block 13 is bonded to the substrate 11 with a silicone structural adhesive, and the silicone structural adhesive is coated to an upper surface of the block 13 to bond the solar photovoltaic laminated glass 12 to the block 13 (that is, the backboard of the solar photovoltaic laminated glass 12 is bonded with the block 13), and the specification of the block and a spacing between the blocks is calculated and determined according to the force on the structure. Alternatively, the substrate 11 or the block 13 is connected to the solar photovoltaic laminated glass 12 by the iron member, for example, when the substrate 11 is a roof with large slope or roof undergoing large negative air pressure, or the substrate 11 is a wall, the iron member is required for connection, so that the solar photovoltaic laminated glass is mounted on the external wall or roof of the building to form a photovoltaic-integrated building. After the solar photovoltaic laminated glass is mounted, it is necessary to plug a circumferential gap between the edge of the solar photovoltaic laminated glass 12 and the substrate 11, for example, by bonding aluminum alloy with silicone structural adhesive, to avoid sand and dust pollution, avoid animals from entering, which is waterproof and decorative.

At present, the photovoltaic glass is fixedly mounted on a plane or an inclined plane with the iron member, as shown in Sichuan Engineering Construction Standard Design Atlas "Building-Integrated System Construction with Cadmium Telluride Photovoltaic Glass" --(Chuan 2021J153TJ). The iron members are dense and standing, with poor stability. The height of the iron member needs to meet the requirements of a large distance (or space) between the photovoltaic glass 12 and the substrate 11, so long-term corrosion protection is a difficult problem.

Furthermore, the substrate 11 is a wall of each of the prefabricated profiled steel thermal insulation panels that are assembled together. An original prefabricated profiled steel thermal insulation panel having a thin insulation layer does not meet the requirements, thus it needs to be thickened. An organic thermal insulation panel and an autoclaved aerated concrete panel meeting the requirements of fire resistance limit are bonded to form a composite thermal insulation panel. A shoot nail type plastic anchor 9 is driven to pass through both the composite thermal insulation panel and an original prefabricated profiled steel thermal insulation panel that is pre-drilled, and then is fixed to concrete or a steel sheet of a primary building structure. A length of the autoclaved aerated concrete panel is designed to match a floor height. Alternatively, when there is no need to thicken the thickness of the thermal insulation layer of the original prefabricated profiled steel thermal insulation panel, the shoot nail type plastic anchor 9 is driven to pass through both the autoclaved aerated concrete panel and the original prefabricated profiled steel thermal insulation panel, and then is fixed to concrete or the steel sheet of the primary building structure. The blocks 13 (including dot-shaped block 13 and strip-shaped block 13-1) are bonded between the substrate 11 of the autoclaved aerated concrete panel at the outer side and the solar photovoltaic laminated glass 12, and a connecting iron member for mounting the solar photovoltaic laminated glass 12 and the blocks 13 and/or the strip-shaped blocks 13-1 are fixed via screws, so that the solar photovoltaic laminated glass is mounted on the wall of the prefabricated profiled steel thermal insulation panel to form a photovoltaic-integrated building.

It may also be necessary to mount light steel keel on an indoor side of the prefabricated profiled steel thermal insulation panel according to a force-loading requirement to increase the stiffness of the prefabricated profiled steel thermal insulation panel. Because heat is generated during photovoltaic power generation, and when the thermal insulation layer of the original prefabricated profiled steel thermal insulation panel is thin, the building energy consumption is high. Therefore, the wall of the original prefabricated profiled steel thermal insulation panel should be transformed into a thermal insulation layer having a thickness that meets the requirements of buildings with near zero energy consumption, and then the photovoltaic laminated glass 12 can be mounted. Even if the thermal insulation layer of the original prefabricated profiled steel thermal insulation panel is an organic thermal insulation layer, it can be transformed to the substrate 11 that is suitable for heat generated during photovoltaic power generation.

In this mounting structure, the solar photovoltaic laminated glass may also be mounted on an external wall of a building with the prefabricated profiled steel thermal insulation panel, where many external walls of industrial workshops are provided with the prefabricated profiled steel thermal insulation panels, and simple civil buildings also have such external walls. The heat emitted by the solar photovoltaic thermal laminated glass can be used as the heat source for domestic hot water and heating in winter, or/and ventilation tubes or fans can be mounted at the edge between the substrate 11 and the solar photovoltaic laminated glass 12, so that the heat can be dissipated when the heat emitted by the solar photovoltaic laminated glass is not needed.

Due to its low light transmittance and restricted maintenance access, it does not recommend mounting the photovoltaic laminated glass at the window, particularly not at locations within normal eye level in front of the window. In addition, multiple specifications of window glass, the working efficiency of the photovoltaic laminated glass is affected. As the air space is small, the high temperature generated by the heating of the photovoltaic laminated glass is not easy to dissipate. However, the photovoltaic laminated glass can be mounted on a daylighting roof as the requirement for the light transmittance of the roof can be reduced, and the photovoltaic laminated glass can be mounted on the transparent roof on site, the distance between the photovoltaic laminated glass and the installed glass can be increased by mounting the blocks 13, thereby reducing the influence of heat generated by the photovoltaic laminated glass during power generation and facilitating the mounting of the photovoltaic laminated glass.

The foregoing is only the preferred embodiment of the present disclosure, and it is not used to limit the present disclosure. Any modification, equivalent substitution, improvement and like made under the inspiration of the present disclosure, regardless of any change in details, should be included in the scope of protection of the present disclosure.

## Claims

1. A glass deep processing technology and mounting technology referring to an external sealing technology for a vacuum insulating glass or an insulating glass unit, wherein the vacuum insulating glass comprises a vacuum insulating glass which is fabricated via a current high-temperature kiln and has a leakage rate, and further comprises a vacuum insulating glass fabricated at a room temperature; each of the insulating glass unit and the vacuum insulating glass fabricated at the room temperature comprises a spacer material 2, two glass panes 1, and an epoxy resin adhesive 6-2; a spacer 2 of the vacuum insulating glass fabricated at the room temperature is a stainless-steel spacer with a height dozens of times that of a spacer material used in the vacuum insulating glass fabricated via the current high-temperature kiln which employs a low-melting-point solder for edge sealing; the vacuum insulating glass fabricated at the room temperature is fabricated by bonding the stainless-steel spacer 2 with peripheries of the two glass panes 1 of the vacuum insulating glass with the epoxy resin adhesive 6-2, mounting a needed evacuation structure, and bonding and mounting pillars 7 between the glass panes in a pattern;
wherein peripheral sealing of the insulating glass unit or/and the vacuum insulating glass adopts following structures and methods, which are selected as required:
(1) spraying a copper layer 3 on a peripheral section of each of two glass panes 1 of the vacuum insulating glass or the vacuum insulating glass which is fabricated via the current high-temperature kiln and has the leakage rate, and welding a pinhole-free copper foil 5 onto the copper layer sprayed on each of the two glass panes 1 with a tin solder 4 for sealing;
(2) spraying a material of a sprayed layer 3 onto a peripheral section of the vacuum insulating glass which is fabricated via the current high-temperature kiln and has the leakage rate, or onto an end section of the assembled vacuum insulating glass fabricated at the room temperature for circumferentially sealing,
(3) spraying a material of the sprayed layer 3 onto the spacer 2 and the two glass panes 1 at a periphery of the assembled vacuum insulating glass or the assembled insulating glass unit for sealing, wherein an outer side of the spacer 2 of the insulating glass unit is not sealed with a silicone structural adhesive;
wherein the sprayed layer 3 meets an adhesion requirement for the two glass panes 1 and the spacer material 2.

2. The glass deep processing technology and mounting technology according to claim 1, wherein the sprayed layer 3 is fully coated with a high-barrier adhesive 6-2 that meets requirements of high and low temperatures in a use environment; the high-barrier adhesive 6-2 is an epoxy resin adhesive or other adhesives that meet barrier and strength requirements, or an air barrier film 5 is bonded onto the sprayed layer 3, or the air barrier film 5 is bonded onto an edge side of the vacuum insulating glass with a width not less than a width of the spacer, wherein the air barrier film 5 is pinhole-free aluminum foil or copper foil.

3. The glass deep processing technology and mounting technology according to claim 1, wherein following structures and methods are adopted for evacuation of the vacuum insulating glass fabricated at the room temperature and sealing of an evacuation port, which are selected as required:
(1) bonding an evacuation tube 9 at an evacuation position of the spacer 2 of the vacuum insulating glass with an adhesive, wherein an outer end of the evacuation tube 9 protrudes outside the vacuum insulating glass and two following options are provided for the evacuation tube 9, which is selected as required:
① the evacuation tube 9 is a thin-walled stainless-steel tube or an oxygen-free copper tube, or an outer surface of an outlet of the stainless-steel evacuation tube 9 is also sprayed with a copper layer 3; or
② the evacuation tube 9 is thick-walled low-melting-point tin or tin alloy tube;
a process of vacuumizing and sealing the evacuation tube 9 is as follows: after the pinhole-free copper foil 5 is welded to the two glass panes 1 or the copper layer 3 sprayed on each of the two glass panes 1, welding the pinhole-free copper foil 5 to the copper layer 3 sprayed on the stainless-steel evacuation tube 9 with the tin solder 4, the oxygen-free copper evacuation tube 9, or the thick-walled low-melting-point tin or tin alloy tube 9 to ensure reliable sealing around the evacuation tube 9; after vacuumizing is performed to meet requirements, activating a non-evaporable Zr-V-Fe getter, performing the vacuumizing until meeting requirements, and closing a vacuum pump valve; ① in a case that the evacuation tube 9 is the thin-walled stainless-steel tube or the oxygen-free copper tube, the outlet of the thin-walled stainless-steel copper tube or the oxygen-free copper tube 9 is clamped and flattened, and then the outlet of the evacuation tube 9 is sealed by welding of the welding machine and then cut off; after the evacuation tube 9 is sealed by welding, the evacuation tube 9 is coated with the high-barrier adhesive 6-2, so that the air barrier film 5 is bonded to the evacuation tube 9 and the sprayed layer 3 on each of two glass panes 1, and is in lap joint with an adjacent air barrier film 5 for sealing; or the air barrier film 5 is welded onto the copper layer 3 on each of the two glass panes 1 and the adjacent copper foil 5 with the tin solder; ② in a case that the evacuation tube 9 is a thick-walled low-melting-point evacuation tube 9, the thick-walled low-melting-point evacuation tube 9 is molten by remote heating, the thick-walled low-melting-point evacuation tube 9 softens under the remote heating and undergoes inward collapse under an external atmospheric pressure to seal a hole of the evacuation tube 9; after the evacuation tube 9 is sealed, the pinhole-free copper foil 5 is welded onto the copper layer 3 on each of the two glass panes 1 on both sides of the evacuation tube 9, as well as the adjacent copper foil 5 and the evacuation tube 9;
(2) in a case that the outer end of the exhaust tube 9 mounted on the spacer 2 does not protrude outside the vacuum insulating glass, the evacuation port of the vacuum insulating glass is located on a surface of one of the two glass panes 1 of the vacuum insulating glass, which is suitable for an edge sealing material of a narrow vacuum layer between the spacer 2 and the glass panes 1 bonded;
a process of vacuumizing and sealing is as follows: spraying a copper layer 3 on an outer surface of the outlet of the evacuation tube in advance, or locally spraying copper or silver on an edge of the evacuation port of one of the two glass panes 1 in advance; after the pinhole-free copper foil 5 is welded onto the periphery of the vacuum insulating glass or the air barrier film 5 is bonded onto the sprayed layer 3 for sealing, placing the vacuum insulating glass being fabricated into a normal-temperature vacuum chamber for vacuumizing, and activating the Zr-V-Fe getter i and performing vacuumizing to a vacuum degree meeting requirements; after the vacuum degree meets the requirements, welding a copper sheet to the outer end of the evacuation tube 9 sprayed with the copper layer 3 with the tin solder molten by a soldering iron, or sealing the evacuation port on the surface of one of the two glass panes 1 with the tin solder molten by the soldering iron.

4. The glass deep processing technology and mounting technology according to claim 1 or 2, wherein a sealing technology and structure for the vacuum insulating glass fabricated at the room temperature are used to seal a vacuum chamber, wherein the vacuum chamber is made of copper, or a copper layer 3 with a certain width is sprayed on an end side of the vacuum chamber 1*, and a copper layer 3 with a certain width is also sprayed on an edge side of an open door 10-1; components needing to be vacuumized are placed into a vacuum chamber 1* to be sealed, the open door 10-1 is inserted into the vacuum chamber 1*, and a hot-melt common solder 4 is coated onto the copper layers 3 on the vacuum chamber 1* and the open door at a joint of the open door 10-1 and the vacuum chamber 1* or an oxygen-free copper joint is welded for sealing, thereby forming a seal on the vacuum chamber, that is, the vacuum chamber is capable of being vacuumized to a required vacuum degree; when the open door 10-1 on the vacuum chamber needs to be opened, a weld of the joint between the open door 10-1 and the vacuum chamber 1* is cut off or/and de-soldered with the soldering iron, then the open door 10-1 is pulled out, and a same process is carried out for next sealing, that is, the vacuum chamber is sealed by welding a common solder 4 coating on a side edge of the joint with the copper layers, thereby forming a vacuum chamber capable of achieving high vacuum degree.

5. A glass deep processing technology and mounting technology, referring to a technology that enables fabrication of an insulating glass unit without removal of a Low-e coating from an edge of a glass pane and without removal of a Low-e coating from an edge of a polyethylene terephthalate (PET) film mounted, so that sealing of the insulating glass unit is enhanced, and both the removal of the Low-e coating from the edge of the glass pane and the removal of the Low-e coating from the edge of the PET film mounted are eliminated, thereby increasing service life of the insulating glass unit; wherein each of the glass panes 1 of the insulating glass unit is a common glass, a safety glass, or a coated glass, or each of the glass panes 1 is further bonded with a coated (PET) film, or one or two of the glass panes 1 on two sides of the insulating glass unit is able to be replaced with an acrylic (PMMA) board 1# and a spacer 2 of the insulating glass unit is a common spacer; or an interlayer 8 is introduced into the insulating glass unit to fabricate dual-cavity or multi-cavity insulating glass unit, wherein the interlayer 8 is a glass pane or an acrylic (PMMA) board, or the interlayer 8 is an acrylic hollow board, and/or the interlayer 8 is a (PET) suspended film 8, wherein the suspended film 8 is a (PET) film coated with a Low-e coating or a (PET) film without a coating, wherein the technology that enables fabrication of an insulating glass unit without removal of a Low-e coating from an edge of a glass pane and without removal of a Low-e coating from an edge of a polyethylene terephthalate (PET) film mounted is as follows: coating an epoxy resin adhesive 6-2 on the Low-e coating on the edge of each of the glass panes 1 for replacing a butyl adhesive 6-1 to bond with the spacer 2, or coating the epoxy resin adhesive 6-2 on the butyl adhesive 6-1 on a bonding surface between the Low-e coating and the spacer 2, that is, bonding the epoxy resin adhesive on Low-e coatings on all bonding surfaces, wherein the Low-e coating at the edge of the glass pane and the Low-e coating at the suspended film 8 do not need to be removed, and the epoxy resin adhesive meets requirements of high and low temperature resistance in a use environment; and no matter what technology is used to mount the glass panes 1 or the suspended film 8, as long as the epoxy resin adhesive is bonded onto the Low-e coating and removal of the Low-e coatings on the glass pane and the (PET) film is not required.

6. The glass deep processing technology and mounting technology according to claim 5, wherein following technologies are adopted to increase sealing of the insulating glass unit:
(1) coating the epoxy resin adhesive 6-2 onto an outer side of the spacer 2, an outer side of the mounted suspended film 8 and an inner side of an end of each of the glass panes 1; bonding an air barrier film 5, which is anodized aluminum foil, onto a surface of the epoxy resin adhesive 6-2, forming fundamental sealing of an air space of the insulating glass unit by means of the air barrier film 5 of the anodized aluminum foil; then filling a silicon structural adhesive 6-3, and bonding the silicon structural adhesive to a U-shaped air barrier film 5 mounted in the insulating glass unit; or
(2) when an inert gas is injected into the insulating glass unit, sealing of drilled holes are enhanced: drilling the insulating glass unit to form a hole passing through the silicone structural adhesive 6-3 and the air barrier film 5 on an inner side of the silicone structural adhesive 6-3 and then passing through the epoxy resin adhesive 6-2 bonded to an inner side of the air barrier film 5 and the spacer 2, or also passing through the (PET) suspended film 8 bonded on an outer side edge of the spacer 2; evacuating an original gas in the air space while injecting the inert gas into the air space; after the injected inert gas meets requirements, coating the epoxy resin adhesive 6-2 or the silicone structural adhesive 6-3 onto a hole for injecting the inert gas and a hole for evacuating the original gas in the air space for sealing, or locally bonding the air barrier film 5 onto the drilled holes for sealing; or
(3) coating a high-barrier adhesive-epoxy resin adhesive 6-2 onto an end section of each of the glass panes 1 of the insulating glass unit; and bonding an air barrier film 5-1 onto the end section of each of the glass panes 1 for sealing and onto the silicone structural adhesive 6-3, or bonding the air barrier film 5-1 onto an edge side of the insulating glass unit by a certain width, wherein the air barrier film 5-1 is anodized aluminum foil, or a plastic film or composite film with meeting requirement with satisfactory barrier property.

7. The glass deep processing technology and mounting technology according to claim 5, wherein a sealing technology for bonding the air barrier film to the insulating glass unit is able to be used for sealing an electronic product: bonding the air barrier film onto a surface of an adhesive for encapsulating the electronic product to prevent water vapor, oxygen or other harmful gases from entering the electronic product, increasing durability of the electronic product, that is, the electronic product is used to replace the insulating glass unit, and a sealing adhesive for the electronic product is the epoxy resin adhesive or other encapsulating adhesives.

8. The glass deep processing technology and mounting technology according to claim 5 or 6, wherein the suspended film 8 is mounted by means of a quick bonding adhesive 6-4 and the epoxy resin adhesive 6-2: bonding an edge of the suspended film 8 with an upper surface of the spacer 2 and an outer side surface of the spacer 2; mounting the quick bonding adhesive of a double-sided adhesive tape 6-4 on the outer side of the spacer 2 in advance; and after the spacer 2 is bonded with the glass panes 1, in a case that the Low-e coating is located on a lower surface of the suspended film 8, coating the epoxy resin adhesive 6-2 on the upper surface of the spacer 2 to be bonded with the lower surface of the suspended film 8, or directly coating the epoxy resin adhesive 6-2 for bonding without using a butyl adhesive 6-1; in a case that no Low-e coating is located on the lower surface of the suspended film 8 and the epoxy resin adhesive 6-2 does not need to be coated on the upper surface of the spacer 2, bonding the suspended film 8 with the butyl adhesive 6-1 or the epoxy resin adhesive 6-2; coating the epoxy resin adhesive 6-2 onto a side edge of the spacer 2, then tearing off a protective film on a surface of the double-sided adhesive tape 6-4, stretching the suspended film 8, and bonding the suspended film 8 with the upper surface of the spacer 2; then bending the suspended film 8 by 90 degrees, and bonding the suspended film 8 with the epoxy resin adhesive 6-2 at an upper half part of the side surface of the spacer 2 and the double-sided adhesive tape 6-4 at a middle part of the side surface of the spacer 2, and then with the epoxy resin adhesive 6-2 at a lower half part of the side surface of the spacer 2, thereby bonding and fixing the suspended film 8 immediately and quickly, wherein the spacer 2 and the suspended film 8 corresponding to each air space are mounted according to a number of air spaces of the insulating glass unit until an outer glass pane 1 is mounted, and then the insulating glass unit is sealed by using the foregoing sealing technology.

9. A glass deep processing technology and mounting technology, referring to a mounting method of glass, wherein the glass comprises a single glass pane, an insulating glass, a vacuum insulating glass, or a vacuum-insulating glass assembly; the vacuum insulating glass comprises vacuum insulating glass fabricated at a room temperature, and further comprises vacuum insulating glass fabricated via a high-temperature kiln; the glass further comprises an acrylic (PMMA) board, or a hollow acrylic (PMMA) board, wherein the mounting method is a mounting method for eliminating a thermal bridge of the fixed sash or cancelling a profile of the open sash and eliminating a thermal bridge of the profile of the open sash, or a mounting method for changing a heat transfer of a gap of the open sash from convective air to static air to reduce heat transfer, and a mouthing method for prolonging service life of a silicone structural adhesive for insulating glass units of a curtail wall when the glass curtain wall is mounted, wherein the glass is mounted by one or more of following methods as required:
(1) a window or glass is mounted at a position within a width of a thermal insulation layer at a door/window section to form a continuous structure between a window glass thermal insulation layer and a wall surface thermal insulation layer; the glass with a low heat transfer coefficient is used for thermal insulation of an indoor base wall 1 at a window side, thereby eliminating a thermal bridge of the indoor base wall 1;
(2) a mounting method for a glass of the fixed sash is as follows: bonding a (basalt fiber-reinforced plastic (BFRP) cloth 50 onto a door/window of a wall, wherein the BFRP cloth 50 is internally provided with an embedded steel plate bonded by an epoxy resin adhesive or anchored by a steel bar; fixing a profile 60 of the fixed sash arranged outdoors to an outdoor embedded steel plate 100-1 of the window via a screw, and fixing a profile 60 of the fixed sash arranged indoors to an indoor embedded steel plate 100-2 of the window via a screw; connecting steel plates at both ends of each of indoor and outdoor profiles 60-1 of the mullion or transom to the embedded steel plate in the BFRP cloth 50 via screws, or by bonding with the epoxy resin adhesive; sandwiching the glass 1-1 of the fixed sash peripherally wrapped with a foamed rubber sponge 90 between the separated profiles 60 of the fixed sash arranged indoors and outdoors and between the separated profile 60-1 of the mullion or transom arranged indoors and outdoors; coating an outdoor edge of the foamed rubber sponge 90 with a silicone sealant for waterproofing, and coating an indoor edge of the foamed rubber sponge 90 with the silicone sealant or glass cement for sealing; wherein the foamed rubber sponge 90 is used to replace a current multi-channel ethylene propylene diene monomer (EPDM) sealing strip for sealing, which changes convection air in the current EPDM sealing strips into static air in the foamed rubber sponge, thereby greatly reducing heat loss from a window gap;
(3) a mounting method for a glass of an open sash is as follows, wherein the glass of the open sash 1-2 is mounted in a profile 80 of the open sash, or the glass of the open sash 1-2 is mounted without the profile 80 of the open sash: bonding a hinge 70 and an open-sash handle on the glass of the open sash with the epoxy resin adhesive, or on the profile 80 of the open sash; connecting the hinge 70 on the glass of the open sash or on the profile 80 of the open sash to the indoor embedded steel plate 100-2 at the window via screws; bonding a waterproof bar for guiding rainwater to flow outwards to an outdoor side of the glass pane of the open sash, mounting a rotary fixing member 20 inside or outside the profile 60-1 of the mullion or transom arranged indoors for blocking the open sash when closing the profile of the open sash or the glass 1-2 of the open sash; mounting the foamed rubber sponge 90 at a gap around the profile of the open sash or the glass 1-2 of the open sash for sealing; wherein the foamed rubber sponge 90 is used to replace the current multi-channel EPDM sealing strip for sealing, which changes convection air in the current EPDM sealing strip into static air in the foamed rubber sponge, thereby greatly reducing the heat loss from the window gap; and
(4) in a case that the insulating glass units are mounted to form a glass curtain wall, bonding an air barrier films 5-1 on indoor and outdoor sides of a silicone structural adhesive filled in a gap of the glass curtain wall, wherein the air barrier film 5-1 is a black anodized aluminum foil; the air barrier film 5-1 is used to protect the silicone structural adhesive filled in the gap of the curtain wall and the silicone structural adhesive at the periphery of the insulating glass unit from corrosion of water vapor, oxygen, salt spray, sulfur dioxide, and the like, or further bonding the air barrier film 5-1 on an edge side of the insulating glass unit to cover an adhesive for bonding the spacer 2, thereby protecting the adhesive for bonding the insulating glass unit of the curtain wall from ultraviolet rays.

10. A glass deep processing technology and mounting technology, referring to a sealing technology of a laminated glass, wherein the laminated glass comprises a laminated glass mounted on a door/window and a curtain wall of a building, and further comprises a solar photovoltaic laminated glass; the solar photovoltaic laminated glass comprises a crystalline-silicon-battery-type solar photovoltaic laminated glass and a thin-film-battery-type solar photovoltaic laminated glass; the sealing technology of the laminated glass is to seal the laminated glass by introducing a high-barrier adhesive, wherein the high-barrier adhesive is an epoxy resin adhesive 6-2 meeting requirements of high and low temperature resistance, or other adhesives meeting requirements of high barrier property, the sealing technology of the laminated glass comprises: coating an air-permeable weak portion of the laminated glass with the epoxy resin adhesive 6-2 for sealing, or when one side of the solar photovoltaic laminated glass is a (PET) plastic backboard 1#, coating the epoxy resin adhesive to a peripheral gap between ends of the plastic backboard 1# and the glass pane 1; and/or shortening a periphery of an interlayer in a middle of the laminated glass by a certain width, and injecting the epoxy resin adhesive 6-2 into an edge gap of the laminated glass; and/or bonding an air barrier film 5 to a side edge of the laminated glass by a certain width with the epoxy resin adhesive 6-2 to block ultraviolet rays; or bonding an edge-wrapped aluminum alloy to a side edge of the solar photovoltaic laminated glass with the epoxy resin adhesive 6-2 to block ultraviolet rays; or coating the epoxy resin adhesive 6-2 to an outer side or an inner side of a transparent backboard of the solar photovoltaic laminated glass; or when the solar photovoltaic laminated glass is cracked by hail or other external forces, coating the epoxy resin adhesive to infiltrate into a crack for repairing; or carrying out spraying on a peripheral section of the laminated glass to form a sprayed layer, coating the epoxy resin adhesive 6-2 on the sprayed layer, and then bonding the air barrier film 5 on a periphery of the solar photovoltaic laminated glass for sealing, wherein the air barrier film 5 is anodized aluminum foil or a composite film of aluminum foil.

11. The glass deep processing technology and mounting technology according to claim 10, wherein a vacuum insulation panel (VIP) and a super thin panel (STP) vacuum insulation panel are used to replace the laminated glass; after hot-melt edge sealing at a joint of the VIP and the STP vacuum insulation panel is performed, coating the high-barrier epoxy resin adhesive 6-2 to edges of sealing sides of the VIP and the STP vacuum insulation panel, or bonding a pinhole-free anodized aluminum foil to enhance sealing of the edges, wherein the epoxy resin adhesive meets requirements of high and low temperature resistance.

12. A glass deep processing technology and mounting technology, referring to a mounting method of a solar photovoltaic laminated glass; the solar photovoltaic laminated glass comprises a thin-film-battery-type photovoltaic laminated glass and a crystalline-silicon battery-type photovoltaic laminated glass, and an assembly prepared by using the mounting method of the solar photovoltaic laminated glass comprises a substrate 11, a solar photovoltaic laminated glass 12, and an adhesive, and further comprises blocks 13, the mounting method of a solar photovoltaic laminated glass comprises: bonding the blocks 13 between the solar photovoltaic laminated glass 12 and the substrate 11 with a silicone structural adhesive for replacing all or part of iron members or bonding the blocks 13 and mounting the iron member for fixing the solar photovoltaic laminated glass 12, wherein each of the blocks 13 is a dot-shaped block 13, or a strip-shaped cushion block 13-1; the substrate 11 is a non-transparent substrate or a glass pane, the block 13 is bonded to the substrate 11 with a silicone structural adhesive, and the silicone structural adhesive is coated to an upper surface of each of the blocks 13 to bond the solar photovoltaic laminated glass 12 with the blocks13; or the substrate 11 or the blocks 13 are connected to the solar photovoltaic laminated glass 12 with the iron members; after the solar photovoltaic laminated glass 12 is mounted, a circumferential gap between an edge of the solar photovoltaic laminated glass 12 and the substrate 11 is filled, so that the solar photovoltaic laminated glass 12 is mounted on an external wall or roof of a building to form a photovoltaic-integrated building.

13. The glass deep processing technology and mounting technology according to claim 12, wherein the substrate 11 is a wall of each of the prefabricated profiled steel thermal insulation panels that are assembled together; an organic thermal insulation panel and an autoclaved aerated concrete panel meeting requirements of fire resistance limit are bonded to form a composite thermal insulation panel, and a shoot nail type plastic anchor 9 is driven to pass through both the composite thermal insulation panel and an original prefabricated profiled steel thermal insulation panel, and then is fixed to concrete or a steel sheet of a primary building structure; or the shoot nail type plastic anchor 9 is driven to pass through both the autoclaved aerated concrete panel and the original prefabricated profiled steel thermal insulation panel, and then is fixed to concrete or a steel sheet of the primary building structure; the blocks 13 are bonded between a substrate 11 of the autoclaved aerated concrete panel at an outer side and the solar photovoltaic laminated glass 12, and a connecting iron member for mounting the solar photovoltaic laminated glass 12 and the blocks 13 and/or the strip-shaped blocks 13-1 are fixed via screws, so that the solar photovoltaic laminated glass is mounted on the wall of each of the prefabricated profiled steel thermal insulation panels to form a photovoltaic-integrated building.
